# EUROPEAN PATENT SPECIFICATION

(11) **EP 3 284 779 B1**
(45) Date of publication and mention of the grant of the patent: **07.10.2020**
(21) Application number: 17186089.3
(22) Date of filing: 14.08.2017
(51) Int. Cl.: C08K 5/372, C08K 5/526, C08K 5/527, C08K 5/5313, C08K 5/5393

(54) **MODIFIED POLYMER COMPOSITION AND STABILIZER MIXTURE FOR MAKING THE SAME**
MODIFIZIERTE POLYMERZUSAMMENSETZUNG UND STABILISIERERMISCHUNG ZUR HERSTELLUNG DAVON
COMPOSITION POLYMÈRE MODIFIÉE ET MÉLANGE STABILISATEUR POUR SA FABRICATION

(30) Priority: 19.08.2016 TW 105126497
(43) Date of publication of application: 21.02.2018
(73) Proprietor: FDC, Lees Co., Ltd., Taipei City 10084 (TW)
(72) Inventor: Lee, Kun-Chang, 10084 Taipei City (TW); Chen, Chen-Kai, 10084 Taipei City (TW); Wang, Jen-Fu, 10084 Taipei City (TW)
(74) Representative: Wibbelmann, Jobst

(56) References cited:
- DE-B- 1 220 602
- US-A- 4 443 572
- DATABASE CA [Online] CHEMICAL ABSTRACTS SERVICE, COLUMBUS, OHIO, US; CHEN, MINGCAI ET AL: "Sulfur-containing organic metal carboxylate composite stabilizer used in halogen-containing polymer", XP002776949, retrieved from STN Database accession no. 147:278450 -& CN 101 003 643 A (GUANGZHOU INSTITUTE OF CHEMISTRY, CHINESE ACADEMY OF SCIENCES, PEOP. R) 25 July 2007 (2007-07-25)
- DATABASE CA [Online] CHEMICAL ABSTRACTS SERVICE, COLUMBUS, OHIO, US; HSUEH, YU-CHIEH ET AL: "Composite stabilizing agent composition and modified polymer material", XP002776971, retrieved from STN Database accession no. 166:432232 -& CN 106 479 040 A (FDC, LEES CHEMICAL INDUSTRY CO., LTD., TAIWAN) 8 March 2017 (2017-03-08)

## Description

The disclosure relates to a modified polymer composition, and more particularly to a modified polymer composition prepared from an olefin-based polymer using a stabilizer mixture which contains at least one organic phosphorus-containing antioxidant and at least one sulfur-containing carboxylate salt.

Olefin-based polymers, such as polyolefins and ethylene-vinyl acetate copolymers, are widely used for making various products, because they have good chemical stability, mechanical strength, electrical insulating ability, and dimensional stability and they are non-toxic and easily processable. However, olefin-based polymers have defects, such as susceptibility to discoloration (for example, yellowing) and reduced mechanical properties, due to oxidative degradation caused by heat, light, and oxygen.

It is well-known that an antioxidant may be used in a process for manufacturing a molding product from an olefin-based polymer to prevent the olefin-based polymer from oxidative degradation so as to enhance the mechanical property and thermal resistance of the olefin-based polymer. However, use of antioxidants might result in coloration and reduced processing stability of olefin-based polymers. In addition, an

anti-acid agent may be used in a process for manufacturing a molding product from an olefin-based polymer to inhibit the degradation of the olefin-based polymer by an acidic substance. Nevertheless, anti-acid agents might result in coloration and reduced processing stability of olefin-based polymers.

DE 12 20 602 B discloses light- and heat-resistant polyolefine compositions comprising a mixture of an organic phosphite such as triphenlyphosphite and an earth alkali salt of a thiodicarboxylic acid such as calcium thiodipropionate.

CN 101 003 643 A discloses a stabilizer mixture for halogen-containing polymers.

According to a first aspect of the disclosure, there is provided a stabilizer mixture for modifying an olefin-based polymer, which comprises:
at least one organic phosphorus-containing antioxidant represented by a formula selected from the group consisting of formulae (1), (2), (3), (4), (5), (6), (7), and (8), 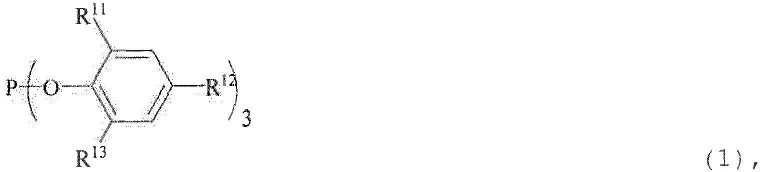 wherein R¹¹, R¹², and R¹³ are independently selected from the group consisting of hydrogen, a tert-butyl group, an isopropylphenyl group, and a linear C₁-C₈ alkyl group, 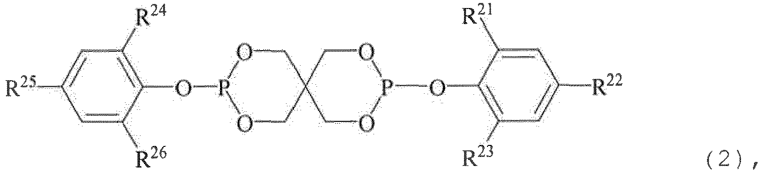 wherein R²¹, R²², R²³, R²⁴, R²⁵, and R²⁶ are independently selected from the group consisting of hydrogen, a tert-butyl group, an isopropylphenyl group, and a linear C₁-C₈ alkyl group, 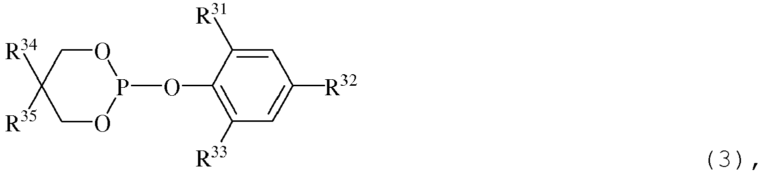 wherein R³¹, R³², R³³, R³⁴, and R³⁵ are independently selected from the group consisting of hydrogen, a tert-butyl group, an isopropylphenyl group, and a linear C₁-C₈ alkyl group, 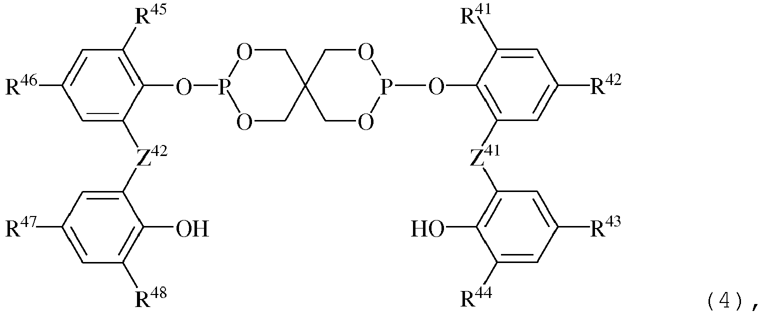 wherein
R⁴¹, R⁴², R⁴³, R⁴⁴, R⁴⁵, R⁴⁶, R⁴⁷, and R⁴⁸ are independently selected from the group consisting of hydrogen, a tert-butyl group, an isopropylphenyl group, and a linear C₁-C₈ alkyl group, and
Z⁴¹ and Z⁴² are independently selected from the group consisting of O, S, and a C₁-C₄ alkylene group, 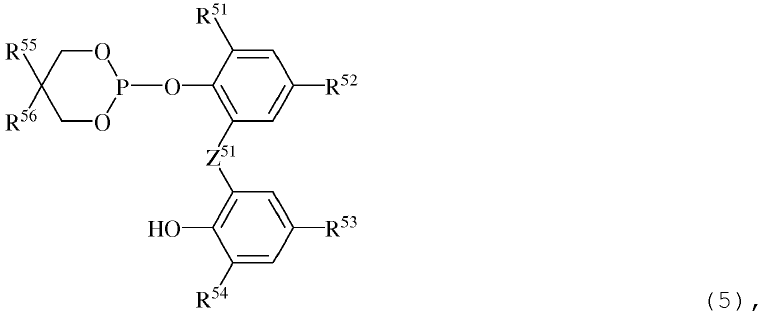
wherein
R⁵¹, R⁵², R⁵³, R⁵⁴, R⁵⁵, and R⁵⁶ are independently selected from the group consisting of hydrogen, a tert-butyl group, anisopropylphenyl group, and a linear C₁-C₈ alkyl group, and
Z⁵¹ is selected from the group consisting of O, S, and a C₁-C₄ alkylene group, 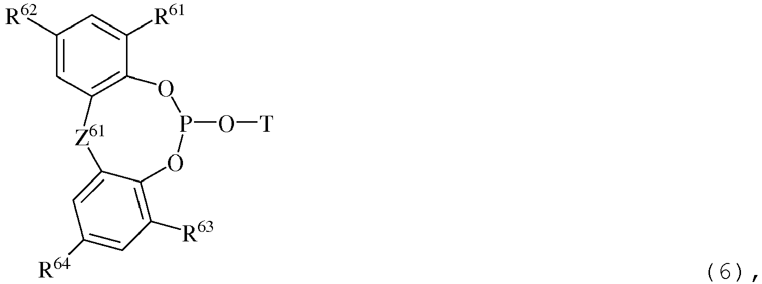
wherein
R⁶¹, R⁶², R⁶³, and R⁶⁴ are independently selected from the group consisting of hydrogen, a tert-butyl group, an isopropylphenyl group, and a linear C₁-C₈ alkyl group,
T is selected from the group consisting of a C₁-C₁₈ hydrocarbon group and a group represented by 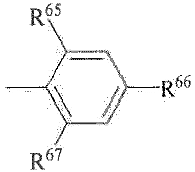 where R⁶⁵, R⁶⁶, and R⁶⁷ are independently selected from the group consisting of hydrogen, a tert-butyl group, anisopropylphenyl group, and a linear C₁-C₈ alkyl group, and
Z⁶¹ is selected from the group consisting of O, S, and a C₁-C₄ alkylene group, 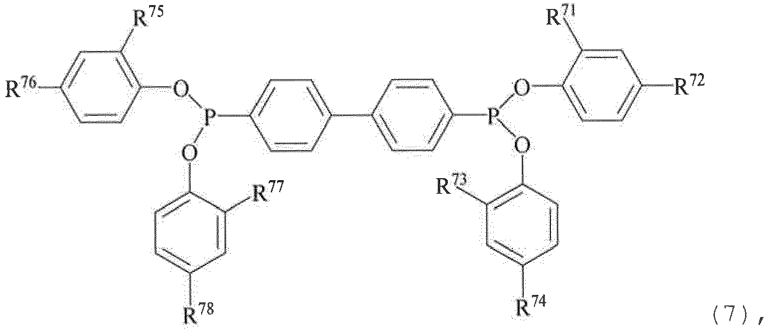
wherein R⁷¹, R⁷², R⁷³, R⁷⁴, R⁷⁵, R⁷⁶, R⁷⁷, and R⁷⁸ are independently selected from the group consisting of hydrogen, a tert-butyl group, an isopropylphenyl group, and a linear C₁-C₈ alkyl group, and 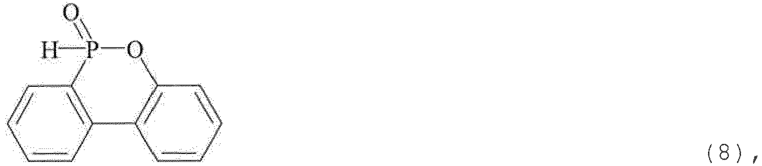 and
at least one sulfur-containing carboxylate salt wherein:
if the at least one organic phosphorus-containing antioxidant is represented by a formula selected from the group consisting of formulae (2), (3), (4), (5), (6), (7), and (8), the at least one sulfur-containing carboxylate salt is represented by a formula selected from the group consisting of formulae (9), (10), (11), and (12); and
if the at least one organic phosphorus-containing antioxidant is represented by formula (1), the at least one sulfur-containing carboxylate salt is represented by a formula selected from the group consisting of formulae (10) and (12), 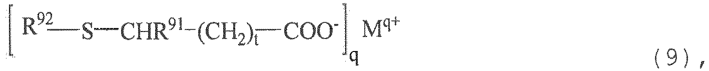
wherein
R⁹¹ is selected from the group consisting of hydrogen and a C₁-C₁₈ alkyl group,
R⁹² is selected from the group consisting of a C₁-C₃₀ alkyl group and a C₆-C₁₈ aryl group,
M^{q+} is selected from the group consisting of Ca²⁺, Ba²⁺, Mg²⁺, Zn²⁺, and Al³⁺,
q is an integer of 2 or 3, and
t is an integer ranging from 0 to 6, 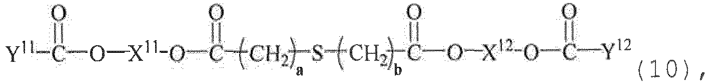
wherein
X¹¹ and X¹² are independently selected from the group consisting of Ca²⁺, Ba²⁺, Mg²⁺, and Zn²⁺,
Y¹¹ and Y¹² are independently selected from the group consisting of a C₁-C₃₀ alkyl group and a C₆-C₁₈ aryl group, and
a and b are independently an integer ranging from 1 to 6, 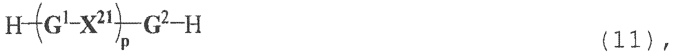
wherein
X²¹ is selected from the group consisting of Ca²⁺, Ba²⁺, Mg²⁺, and Zn²⁺,
G¹ and G² independently represent 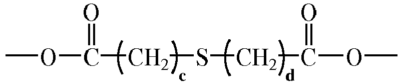 where c and d are independently an integer ranging from 1 to 6, and
p is an integer ranging from 1 to 9 on the proviso that a plurality of G¹ are the same or different and a plurality of X²¹ are the same or different when p is an integer equal to or larger than 2,
   and 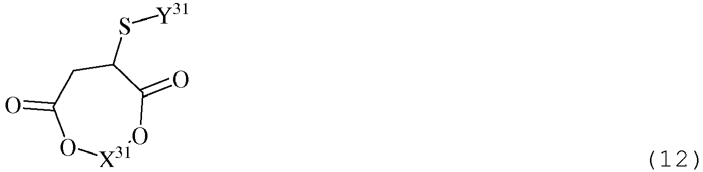
wherein
X³¹ is selected from the group consisting of Ca²⁺, Ba²⁺, Mg²⁺, and Zn²⁺, and
Y³¹ is selected from the group consisting of a C₁-C₃₀ alkyl group, a C₆-C₁₈ aryl group, and a group represented by R⁹³OOC- (CH₂)ₖ- where R⁹³ is selected from the group consisting of a C₁-C₃₀ alkyl group and a C₆-C₁₈ aryl group, and k is an integer ranging from 1 to 5.

According to a second aspect of the disclosure, there is provided a modified polymer composition prepared from an olefin-based polymer using the aforesaid stabilizer mixture. The olefin-based polymer is selected from the group consisting of polyolefin, ethylene-vinyl acetate copolymer, and a combination thereof.

The present disclosure provides a stabilizer mixture for modifying an olefin-based polymer, which comprises at least one organic phosphorus-containing antioxidant and at least one sulfur-containing carboxylate salt.

According to the present disclosure, the at least one organic phosphorus-containing antioxidant is represented by a formula selected from the group consisting of formulae (1), (2), (3), (4), (5), (6), (7), and (8), which are shown below. In other words, the organic phosphorus-containing antioxidant in the stabilizer mixture may be selected from the group consisting of the organic phosphorus-containing antioxidant of formula (1), the organic phosphorus-containing antioxidant of formula (2), the organic phosphorus-containing antioxidant of formula (3), the organic phosphorus-containing antioxidant of formula (4), the organic phosphorus-containing antioxidant of formula (5), the organic phosphorus-containing antioxidant of formula (6), the organic phosphorus-containing antioxidant of formula (7), the organic phosphorus-containing antioxidant of formula (8), and combinations thereof.

The organic phosphorus-containing antioxidant represented by formula (1) is as follows: 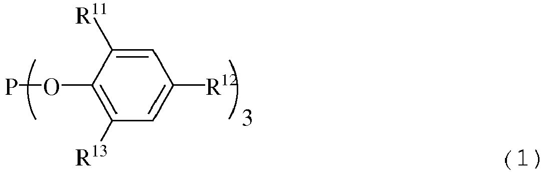 wherein R¹¹, R¹², and R¹³ are independently selected from the group consisting of hydrogen, a tert-butyl group, an isopropylphenyl group, and a linear C₁-C₈ alkyl group.

The organic phosphorus-containing antioxidant represented by formula (2) is as follows: 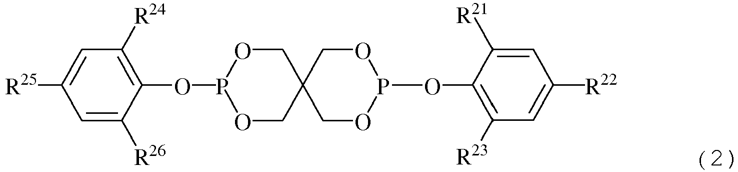 wherein R²¹, R²², R²³, R²⁴, R²⁵, and R²⁶ are independently selected from the group consisting of hydrogen, a tert-butyl group, an isopropylphenyl group, and a linear C₁-C₈ alkyl group.

The organic phosphorus-containing antioxidant represented by formula (3) is as follows: 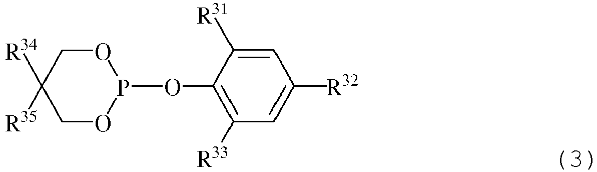 wherein R³¹, R³², R³³, R³⁴, and R³⁵ are independently selected from the group consisting of hydrogen, a tert-butyl group, anisopropylphenyl group, and a linear C₁-C₈ alkyl group.

The organic phosphorus-containing antioxidant represented by formula (4) is as follows: 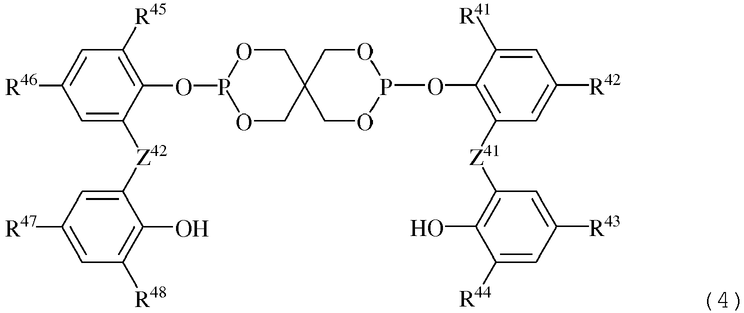 wherein R⁴¹, R⁴², R⁴³, R⁴⁴, R⁴⁵, R⁴⁶, R⁴⁷, and R⁴⁸ are independently selected from the group consisting of hydrogen, a tert-butyl group, an isopropylphenyl group, and a linear C₁-C₈ alkyl group, and Z⁴¹ and Z⁴² are independently selected from the group consisting of O, S, and a C₁-C₄ alkylene group.

The organic phosphorus-containing antioxidant represented by formula (5) is as follows: 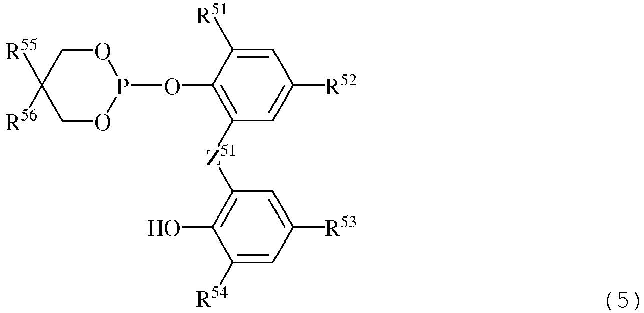 wherein R⁵¹, R⁵², R⁵³, R⁵⁴, R⁵⁵, and R⁵⁶ are independently selected from the group consisting of hydrogen, a tert-butyl group, an isopropylphenyl group, and a linear C₁-C₈ alkyl group, and Z⁵¹ is selected from the group consisting of O, S, and a C₁-C₄ alkylene group.

The organic phosphorus-containing antioxidant represented by formula (6) is as follows: 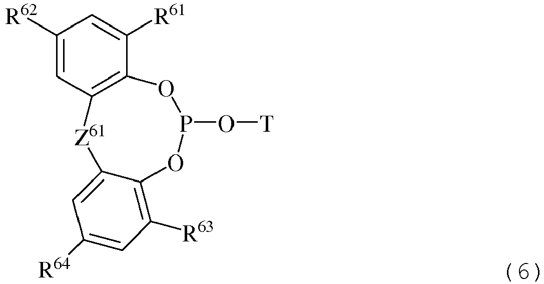 wherein R⁶¹, R⁶², R⁶³, and R⁶⁴ are independently selected from the group consisting of hydrogen, a tert-butyl group, an isopropylphenyl group, and a linear C₁-C₈ alkyl group, T is selected from the group consisting of a C₁-C₁₈ hydrocarbon group and a group represented by 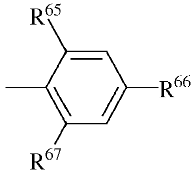 where R⁶⁵, R⁶⁶, and R⁶⁷ are independently selected from the group consisting of hydrogen, a tert-butyl group, anisopropylphenyl group, and a linear C₁-C₈ alkyl group, and Z⁶¹ is selected from the group consisting of O, S, and a C₁-C₄ alkylene group.

The organic phosphorus-containing antioxidant represented by formula (7) is as follows: 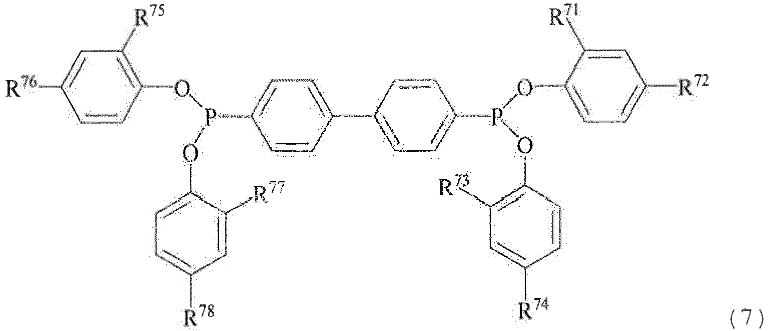 wherein R⁷¹, R⁷², R⁷³, R⁷⁴, R⁷⁵, R⁷⁶, R⁷⁷, and R⁷⁸ are independently selected from the group consisting of hydrogen, a tert-butyl group, an isopropylphenyl group, and a linear C₁-C₈ alkyl group.

The organic phosphorus-containing antioxidant represented by formula (8) is as follows:

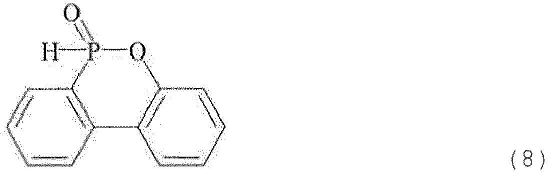

According to the present disclosure, the at least one sulfur-containing carboxylate salt is represented by a formula selected from the group consisting of formulae (9), (10), (11), and (12), which are shown below. If the at least one organic phosphorus-containing antioxidant is represented by formula (1), the at least one sulfur-containing carboxylate salt is represented by a formula selected from the group consisting of formulae (10) and (12).

In other words, the sulfur-containing carboxylate salt in the stabilizer mixture may be selected from the group consisting of the sulfur-containing carboxylate salt of formula (9), the sulfur-containing carboxylate salt of formula (10), the sulfur-containing carboxylate salt of formula (11), the sulfur-containing carboxylate salt of formula (12), and combinations thereof.

The sulfur-containing carboxylate salt represented by formula (9) is as follows: 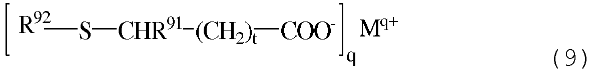 wherein R⁹¹ is selected from the group consisting of hydrogen and a C₁-C₁₈ alkyl group; R⁹² is selected from the group consisting of a C₁-C₃₀ alkyl group and a C₆-C₁₈ aryl group; M^{q+} is selected from the group consisting of Ca²⁺, Ba²⁺, Mg²⁺, Zn²⁺, and Al³⁺; q is an integer of 2 or 3; and t is an integer ranging from 0 to 6.

The sulfur-containing carboxylate salt represented by formula (10) is as follows: 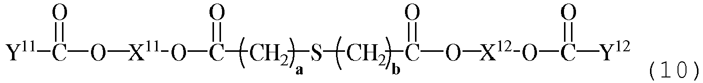 wherein X¹¹ and X¹² are independently selected from the group consisting of Ca²⁺, Ba²⁺, Mg²⁺, and Zn²⁺; Y¹¹ and Y¹² are independently selected from the group consisting of a C₁-C₃₀ alkyl group and a C₆-C₁₈ aryl group; and a and b are independently an integer ranging from 1 to 6.

The sulfur-containing carboxylate salt represented by formula (11) is as follows: 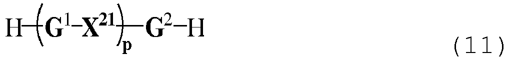 wherein X²¹ is selected from the group consisting of Ca²⁺, Ba²⁺, Mg²⁺, andZn²⁺; G¹ and G² independently represent 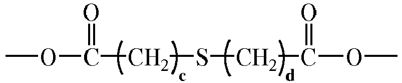 where c and d are independently an integer ranging from 1 to 6; and p is an integer ranging from 1 to 9 on the proviso that a plurality of G¹ are the same or different and a plurality of X²¹ are the same or different when p is an integer equal to or larger than 2.

The sulfur-containing carboxylate salt represented by formula (12) is as follows: 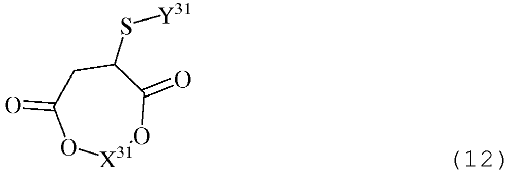 wherein X³¹ is selected from the group consisting of Ca²⁺, Ba²⁺, Mg²⁺, and Zn²⁺; and Y³¹ is selected from the group consisting of a C₁-C₃₀ alkyl group, a C₆-C₁₈ aryl group, and a group represented by R⁹³OOC- (CH₂)ₖ- where R⁹³ is selected from the group consisting of a C₁-C₃₀ alkyl group and a C₆-C₁₈ aryl group, and k is an integer ranging from 1 to 5.

The present disclosure further provides a modified polymer composition which is prepared from an olefin-based polymer using the aforesaid stabilizer mixture.

More details of the olefin-based polymer and the stabilizer mixture according to the present disclosure are described below.

### Olefin-based polymer:

The olefin-based polymer suitable for the disclosure is selected from the group consisting of polyolefins, ethylene-vinyl acetate copolymers, and combinations thereof.

### Stabilizer mixture:

Examples of the organic phosphorus-containing antioxidant represented by formula (1) include, but are not limited to, tris(2,4-di-tert-butylphenyl) phosphite (Antioxidant 168), triphenyl phosphite, tris(4-tert-butylphenyl) phosphite, tris(nonylphenyl) phosphite, and tris(p-cumylphenyl) phosphite.

Examples of the organic phosphorus-containing antioxidant represented by formula (2) include, but are not limited to, bis(2,4-di-tert-butylphenyl)pentaerythritol diphosphite (Antioxidant 626), 3,9-bis(2,4-cumylphenoxy)-2,4,8,10-tetraoxatetradec -an-3,9-diphosphaspiro[5.5]undecane (Antioxidant 9228), diphenyl pentaerythritol diphosphite, and 2,4,8,10-tetraoxa-3,9-diphosphaspiro[5.5]undecane.

Examples of the organic phosphorus-containing antioxidant represented by formula (3) include, but are not limited to, 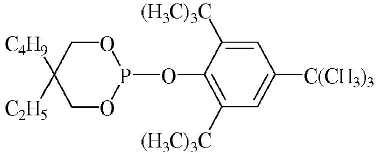 (CAS No. 161717-32-4), 2-[2,4-bis(1,1-dimethylethyl)phenoxy]-5,5-dimethyl-1,3,2-dioxaphosphorinane, 2,4-dicumylphenyl 2-butyl-2-ethyl-1,3-propanediol phosphite, and 2-[2,4-bis(1,1-dimethylethyl)phenoxy]-5-butyl-5-ethyl-1,3,2-dioxaphosphorinane.

A non-limiting example of the organic phosphorus-containing antioxidant represented by formula (4) is 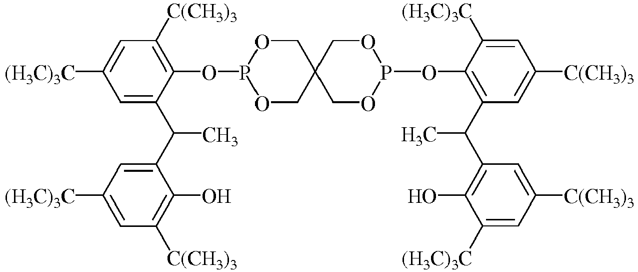 (CAS No. 1601458-04-1) .

A non-limiting example of the organic phosphorus-containing antioxidant represented by formula (5) is 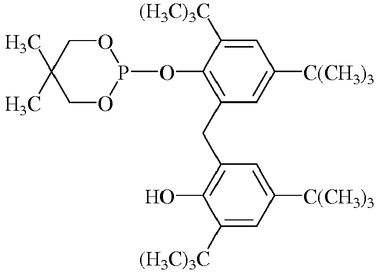 (CAS No. 205518-79-2) .

Examples of the organic phosphorus-containing antioxidant represented by formula (6) include, but are not limited to, 2,4,8,10-tetra-tert-butyl-6-[(2-ethylhexyl)oxy]-12H-dibenzo[d,g][1,3,2]dioxaphosphocin (HP-10), 2,2'-thiobis[6-tert-butyl-p-cresol] cyclic monophenyl phosphite, and 2,2'-methylene bis(4,6-di-tert-butylphenyl) (2,4-di-tert-butylphenyl) phosphite.

Examples of the organic phosphorus-containing antioxidant represented by formula (7) include, but are not limited to, Antioxidant P-EPQ, phosphonous acid,[1,1'-biphenyl]-4,4'-diylbis-,tetrakis[2-(1,1-dimethylethyl)phenyl] ester, and phosphonous acid,[1,1'-biphenyl]-4,4'-diylbis-,tetraphenyl ester.

In certain embodiments, R⁹¹ represents hydrogen, and R⁹² is selected from the group consisting of a C₁-C₁₈ alkyl group and a C₆-C₁₈ aryl group. The term "aryl group" refers to a non-substituted aryl group, a hydrocarbon-substituted aryl group, or an aryl-substituted hydrocarbon group. In certain embodiments, R⁹² is dodecyl. Examples of the sulfur-containing carboxylate salt represented by formula (9) include, but are not limited to, (C₁₂H₂₅SCH₂COO)₂Zn, (C₁₂H₂₅SCH₂COO)₂Ca, (C₁₂H₂₅SCH₂CH₂COO)₂Zn, (C₁₂H₂₅SCH₂CH₂COO)₂Ca, and (C₁₂H₂₅SCH₂CH₂COO) ₃Al.

In certain embodiments, X¹¹ and X¹² are independently selected from the group consisting of Ca²⁺ and Zn²⁺, and Y¹¹ and Y¹² are independently selected from the group consisting of -C₇H₁₅ and -C₁₇H₃₅. Examples of the sulfur-containing carboxylate salt represented by formula (10) include, but are not limited to, 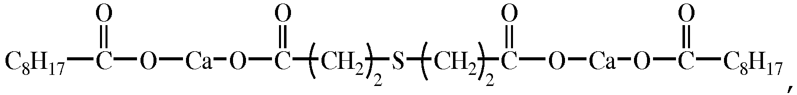 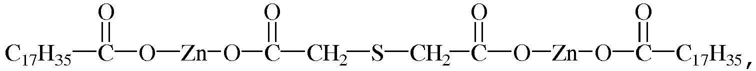 and

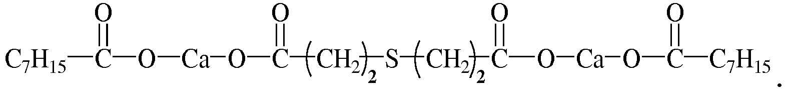

In certain embodiments , X²¹ is selected from the group consisting of Ca²⁺ and Zn²⁺, and G¹ and G² are independently 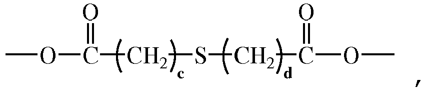 wherein c and d are independently 1 or 2. Examples of the sulfur-containing carboxylate salt represented by formula (11) include, but are not limited to, 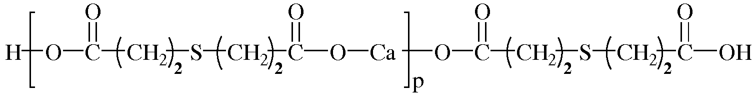 and 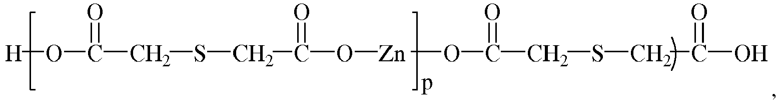 wherein p is an integer ranging from 1 to 9.

Examples of the sulfur-containing carboxylate salt represented by formula (12) include, but are not limited to,

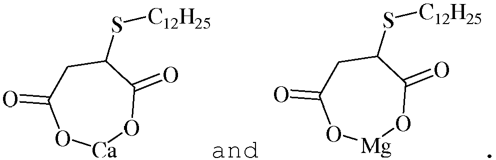

A ratio of the organic phosphorus-containing antioxidant to the sulfur-containing carboxylate salt ranges from 1:99 to 99:1.

According to the present disclosure, the stabilizer mixture may further comprise an antioxidant selected from the group consisting of a hindered phenolic antioxidant, a benzofuranone-based antioxidant, an amine oxide-based antioxidant, and combinations thereof.

Examples of the hindered phenolic antioxidant include, but are not limited to, pentaerythritol-tetra-[β-(3,5-di-tert-butyl-4-hydroxyphenyl)-propionate], ethylenebis(oxyethylene)bis[β-(3-tert-butyl-4-hydroxy-5-methylphenyl)propionate], 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, tris(butylcresol)butane, 4,4'-butylidenebis(6-tert-butyl-3-methylphenol), N,N'-bis[3-(3,5-di-tert-butyl-4-hydroxyphenyl)propionyl] hydrazide, N,N'-bis-[3-(3,5-di-tert-butyl-4-hydroxyphenyl)propionyl]hexamethylenediamine, 2,2'-methylenebis-(4-methyl-6-tert-butylphenol), octyl-3,5-di-tert-butyl-4-hydroxy-hydrocinnamate, 1,2-di[-(3,5-di-tert-butyl-4-hydroxyphenyl)propionyl]hydrazide, and 2,2'-oxamidobis[ethyl-3-(3,5-di-t-butyl-4-hydroxyphenyl)propionate]. A suitable hindered phenolic antioxidant may be used solely or in combination with other suitable hindered phenolic antioxidant(s).

Examples of the benzofuranone-based antioxidant include, but are not limited to, xylyl dibutylbenzofuranone, 5-(tert-butyl)-3-[5-(tert-butyl)-2-hydroxyphenyl]benzofuran-2(3H)-one (Chemical Abstracts Service (CAS) No. 214354-68-4), and 3-[3,5-bis(1,1-dimethylethyl)-2-hydroxyphenyl]-5,7-bis(1,1-dimethylethyl)-2(3H)-benzofuranone (CAS No. 210709-72-1). A suitable benzofuranone-based antioxidant may be used solely or in combination with other suitable benzofuranone-based antioxidant(s).

Examples of the amine oxide-based antioxidant include, but are not limited to, oxidized bis(hydrogenated tallow alkyl)amine and bis(octadecyl)hydroxylamine. A suitable amine oxide-based antioxidant may be used solely or in combination with other suitable amine oxide-based antioxidant (s) .

According to the present disclosure, the stabilizer mixture may further comprise an additive selected from the group consisting of an antacid agent, a metal deactivating agent, and the combination thereof.

The antacid agent is able to balance the pH of the modified polymer composition and to render the antioxidant(s) and sulfur-containing carboxylate salt(s) employed more compatible, and may be a fatty acid salt. Exemplary fatty acid salts include, but are not limited to, calcium stearate, zinc stearate, magnesium docosanoate, magnesium stearate, sodium ricinoleate, and potassium palmitate. A suitable fatty acid salt may be used solely or in combination with other suitable fatty acid salt(s).

The metal deactivating agent is able to prevent the property of the modified polymer composition from deteriorating. Exemplary metal deactivating agents include, but are not limited to, oxalyl-bis(benzylidene)hydrazide. Suitable commercially available metal deactivating agents include, but are limited to, Eastman Inhibitor OABH.

In certain embodiments, the stabilizer mixture is present in an amount ranging from 0.01 to 2.2 parts by weight based on 100 parts by weight of the olefin-based polymer. There is no limitation to the method for preparing the modified polymer composition of the present disclosure. For example, the modified polymer composition may be preparing by mixing the olefin-based polymer with the stabilizer mixture.

There is no limitation to the subsequent processing method for the modified polymer composition. Any conventional processes for molding polyolefins and ethylene-vinyl acetate copolymers maybe used. Examples of the molding processes include, but are not limited to, extrusion molding, injection molding, and the like.

Examples of the disclosure will be described hereinafter. It is to be understood that these examples are exemplary and explanatory and should not be construed as a limitation to the disclosure.

### Reagents used in following examples:

1. Polypropylene: B8001 commercially available from Formosa Chemicals & Fibre Corp., referred to as PP in Tables 1 and 2;
2. Polyethylene: LH608Mcommercially available from USI Corporation (Taiwan), referred to as PE in Tables 1 and 2;
3. Tris(2,4-di-tert-butylphenyl) phosphite (Antioxidant 168): an example of the organic phosphorus-containing antioxidant represented by formula (1), referred to as A1 in Tables 1 and 2;
4. Bis(2,4-di-tert-butylphenyl)pentaerythritol diphosphite (Antioxidant 626) : an example of the organic phosphorus-containing antioxidant represented by formula (2), referred to as A2 in Tables 1 and 2;
5.3,9-bis(2,4-cumylphenoxy)-2,4,8,10-tetraoxatetra-decan-3,9-diphosphaspiro[5.5]undecane (Antioxidant 9228) : an example of the organic phosphorus-containing antioxidant represented by formula (2), referred to as A3 in Tables 1 and 2;
6. 2,4,8,10-tetra-tert-butyl-6-[(2-ethylhexyl)oxy]-12H-dibenzo[d,g][1,3,2]dioxaphosphocin (HP-10): an example of the organic phosphorus-containing antioxidant represented by formula (6), referred to as A4 in Tables 1 and 2;
7. Antioxidant P-EPQ: 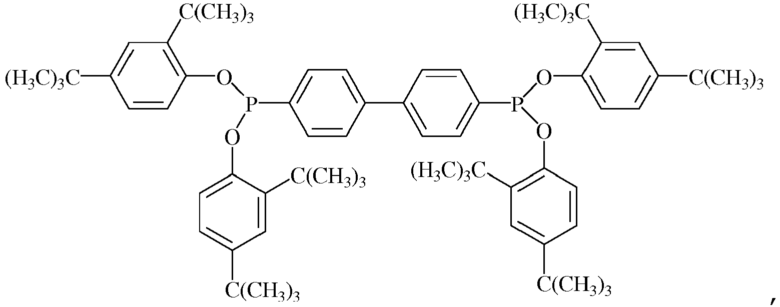 an example of the organic phosphorus-containing antioxidant represented by formula (7), referred to as A5 in Tables 1 and 2;
8. 9,10-dihydro-9-oxa-10-phosphaphenanthrene-10 oxide (DOPO): the organic phosphorus-containing antioxidant represented by formula (8), referred to as A6 in Tables 1 and 2;
9. 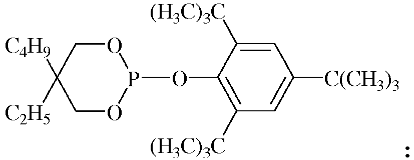 CAS No. 161717-32-4 , an example of the organic phosphorus-containing antioxidant represented by formula (3), referred to as A7 in Tables 1 and 2;
10. 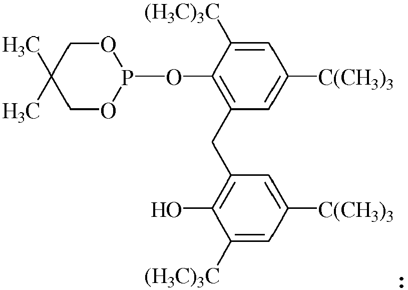 CAS No. 205518-79-2 , an example of the organic phosphorus-containing antioxidant represented by formula (5), referred to as A8 in Tables 1 and 2;
11. 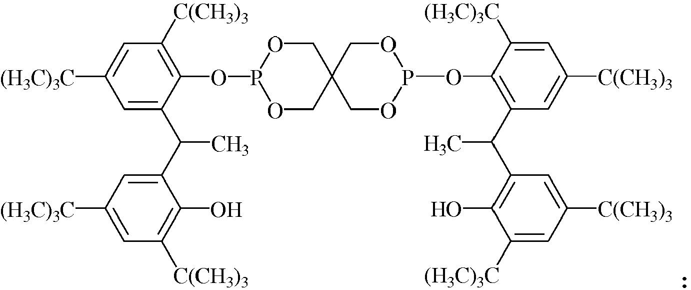 CAS No. 1601458-04-1 , an example of the organic phosphorus-containing antioxidant represented by formula (4), referred to as A9 in Tables 1 and 2;
12. (C₁₂H₂₅SCH₂CH₂COO)₂Ca: an example of the sulfur-containing carboxylate salt represented by formula (9), referred to as B1 in Tables 1 and 2;
13. (C₁₂H₂₅SCH₂CH₂COO)₃Al: an example of the sulfur-containing carboxylate salt represented by formula (9), referred to as B2 in Tables 1 and 2;
14. 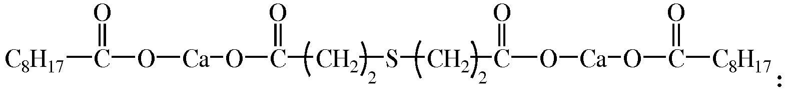 an example of the sulfur-containing carboxylate salt represented by formula (10), referred to as B3 in Tables 1 and 2;
15. 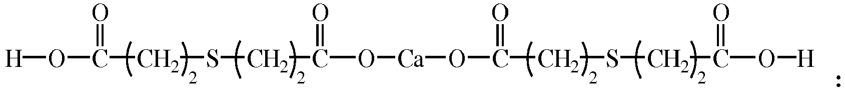 an example of the sulfur-containing carboxylate salt represented by formula (11), referred to as B4 in Tables 1 and 2;
16. 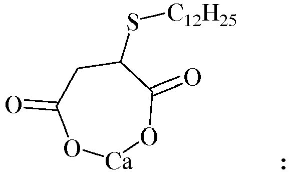 an example of the sulfur-containing carboxylate salt represented by formula (12), referred to as B5 in Tables 1 and 2; and 17. Distearyl thiodipropionate: referred to as DSTDP.

### Examples 1-18:

In each of Examples 1-16, 100 parts by weight of polypropylene was uniformly mixed with a stabilizer mixture in an amount shown in Table 1 at 25°C to prepare a modified polymer composition of the present disclosure . In each of Examples 17 and 18, 100 parts by weight of polyethylene was uniformly mixed with a stabilizer mixture in an amount shown in Table 1 at 25°C to prepare a modified polymer composition of the present disclosure.

### Comparative Examples 1-21:

In each of Comparative Examples 1-17 and 20-21, 100 parts by weight of polypropylene was uniformly mixed with a stabilizer(s) (i.e. an organic phosphorus-containing antioxidant alone, a sulfur-containing carboxylate ester alone, a sulfur-containing carboxylate salt alone, or a combination of an organic phosphorus-containing antioxidant and a sulfur-containing carboxylate ester) in an amount shown in Table 2 at 25°C to prepare a modified polymer composition. In each of Comparative Examples 18 and 19, 100 parts by weight of polyethylene was uniformly mixed with a stabilizer (i.e. an organic phosphorus-containing antioxidant alone) in an amount shown in Table 2 at 25°C to prepare a modified polymer composition.

### Evaluation Tests:

Each of the modified polymer compositions prepared in Examples 1-18 and Comparative Examples 1-21 was extruded using a twin-screw extruder (Model No. PSM20A, produced by Sino-Alloy Machinery Inc.; temperature: 190-230°C, extruder screw speed: 200 rpm, feed rate: 6 rpm), followed by cooling, air-drying, pelletization, and oven drying. Therefore, a specimen was prepared. The specimen was further processed repeatedly by the steps of extrusion, cooling, air-drying, pelletization, and oven-drying to evaluate variations in yellowness and melt index after several times of processing. The smaller the variation in the yellowness of the specimen is, the better the color stability of the specimen is. Similarly, the smaller the variation in the melt index of the specimen is, the better the processing stability of the specimen is.

### 1. Yellowness Difference (Δb*)

For the specimen of each of the modified polymer compositions prepared in Examples 1-18 and Comparative Examples 1-21, the yellowness difference (Δb*) between the yellowness of the specimen obtained after the third extrusion process and that of the specimen obtained after the first extrusion process was determined using a spectrophotometer (ColorQuest XE produced by HunterLab). Likely, for the specimen of each of the modified polymer compositions prepared in Examples 1-18 and Comparative Examples 1-21, the yellowness difference (Δb*) between the yellowness of the specimen obtained after the fifth extrusion process and that of the specimen obtained after the first extrusion process was determined using a spectrophotometer (ColorQuest XE produced by HunterLab). The results are shown in Tables 3 and 4.

### 2. Melt Index Difference (ΔMI)

For the specimen of each of the modified polymer compositions prepared in Examples 1-18 and Comparative Examples 1-21, the melt index difference (ΔMI) between the melt index of the specimen obtained after the third extrusion process and that of the specimen obtained after the first extrusion process was determined using Laboratory Melt Indexer LMI D4004 produced by Dynisco. Likely, for each of the modified polymer compositions prepared in Examples 1-18 and Comparative Examples 1-21, the melt index difference (ΔMI) of the specimen between the melt index of the specimen obtained after the fifth extrusion process and that of the specimen obtained after the first extrusion process was determined using Laboratory Melt Indexer LMI D4004 produced by Dynisco. The melt index difference is defined as the ratio of the melt index of the specimen obtained after a respective subsequent extrusion process (third or fifth) to the melt index of the specimen obtained after the first extrusion process. The results are shown in Tables 3 and 4.

**Table 1**

| Exs. | Polymer | | Stabilizer Mixture | | | | | | | | | | | | | |
|---|---|---|---|---|---|---|---|---|---|---|---|---|---|---|---|---|
| | | | Organic phosphorus-containing antioxidant | | | | | | | | | Sulfur-containing carboxylate salt | | | | |
| | PP | PE | A1 | A2 | A3 | A4 | A5 | A6 | A7 | A8 | A9 | B1 | B2 | B3 | B4 | B5 |
| 1 | 100 | - | 0.02 | - | - | - | - | - | - | - | - | 0.02 | - | - | - | - |
| 2 | 100 | - | - | 0.02 | - | - | - | - | - | - | - | 0.02 | - | - | - | - |
| 3 | 100 | - | - | - | 0.02 | - | - | - | - | - | - | 0.02 | - | - | - | - |
| 4 | 100 | - | - | - | - | 0.02 | - | - | - | - | - | 0.02 | - | - | - | - |
| 5 | 100 | - | - | - | - | - | 0.02 | - | - | - | - | 0.02 | - | - | - | - |
| 6 | 100 | - | - | - | - | - | - | 0.02 | - | - | - | 0.02 | - | - | - | - |
| 7 | 100 | - | - | - | - | - | - | - | 0.02 | - | - | 0.02 | - | - | - | - |
| 8 | 100 | - | - | - | - | - | - | - | - | 0.02 | - | 0.02 | - | - | - | - |
| 9 | 100 | - | - | - | - | - | - | - | - | - | 0.02 | 0.02 | - | - | - | - |
| 10 | 100 | - | 0.02 | - | - | - | - | - | - | - | - | - | 0.02 | - | - | - |
| 11 | 100 | - | 0.02 | - | - | - | - | - | - | - | - | - | - | 0.02 | - | - |
| 12 | 100 | - | 0.02 | - | - | - | - | - | - | - | - | - | - | - | 0.02 | - |
| 13 | 100 | - | 0.02 | - | - | - | - | - | - | - | - | - | - | - | - | 0.02 |
| 14 | 100 | - | 1 | - | - | - | - | - | - | - | - | 1 | - | - | - | - |
| 15 | 100 | - | 0.01 | - | - | - | - | - | - | - | - | 0.99 | - | - | - | - |
| 16 | 100 | - | 0.99 | - | - | - | - | - | - | - | - | 0.01 | - | - | - | - |
| 17 | - | 100 | 0.02 | - | - | - | - | - | - | - | - | 0.02 | - | - | - | - |
| 18 | - | 100 | - | 0.02 | - | - | - | - | - | - | - | 0.02 | - | - | - | - |

**Table 2**

| Comp. Exs. | Polymer | | Stabilizer(s) | | | | | | | | | | | | | | |
|---|---|---|---|---|---|---|---|---|---|---|---|---|---|---|---|---|---|
| | | | Organic phosphorus-containing antioxidant | | | | | | | | | Sulfur-containing carboxylate ester | Sulfur-containing carboxylate salt | | | | |
| | PP | PE | A1 | A2 | A3 | A4 | A5 | A6 | A7 | A8 | A9 | DSTDP | B1 | B2 | B3 | B4 | B5 |
| 1 | 100 | - | 0.02 | - | - | - | - | - | - | - | - | - | - | - | - | - | - |
| 2 | 100 | - | - | 0.02 | - | - | - | - | - | | - | - | - | - | - | - | - |
| 3 | 100 | - | - | - | 0.02 | - | - | - | - | - | | - | - | | - | - | - |
| 4 | 100 | - | - | - | - | 0.02 | - | - | - | - | - | - | - | - | - | - | - |
| 5 | 100 | - | - | - | - | - | 0.02 | - | - | - | - | - | - | - | - | - | - |
| 6 | 100 | - | - | - | - | - | - | 0.02 | - | | - | - | - | - | - | - | - |
| 7 | 100 | - | - | - | - | - | - | - | 0.02 | - | - | - | - | - | - | - | - |
| 8 | 100 | - | - | - | - | - | - | - | - | 0.02 | - | - | - | - | - | - | - |
| 9 | 100 | - | - | - | - | - | - | - | - | - | 0.02 | _ | | - | - | - | - |
| 10 | 100 | - | - | - | - | - | - | - | - | - | - | 0.02 | - | - | - | - | - |
| 11 | 100 | - | 0.02 | - | - | - | - | - | - | - | - | 0.02 | - | - | - | - | - |
| 12 | 100 | - | - | 0.02 | - | - | - | - | - | - | - | 0.02 | - | | | | |
| 13 | 100 | - | - | - | - | - | - | - | - | - | - | - | - | - | - | - | - |
| 14 | 100 | - | - | - | - | - | - | - | - | - | - | - | 0.02 | - | - | - | - |
| 15 | 100 | - | - | - | - | - | - | | - | - | | - | - | 0.02 | - | - | - |
| 16 | 100 | - | - | - | - | - | - | - | | - | - | - | - | - | 0.02 | - | - |
| 17 | 100 | - | - | - | - | - | - | - | - | - | - | - | - | - | - | 0.02 | - |
| 18 | - | 100 | 0.02 | - | - | - | - | - | - | - | - | - | - | - | - | - | 0.02 |
| 19 | - | 100 | - | 0.02 | - | - | - | - | - | - | - | - | - | - | - | - | - |
| 20 | 100 | - | 1 | - | - | - | - | - | - | - | - | - | - | - | - | - | - |
| 21 | 100 | - | - | - | - | - | - | - | - | - | - | - | 1 | - | - | - | - |

**Table 3**

| Specimens | Δb* | | ΔMI | |
|---|---|---|---|---|
| | 3^{rd} Extrusion | 5^{th} Extrusion | 3^{rd} Extrusion | 5^{th} Extrusion |
| E1 | 2.66 | 5.04 | 161.58% | 258.64% |
| E2 | 2.46 | 4.35 | 148.93% | 235.25% |
| E3 | 1.81 | 3.74 | 112.29% | 182.76% |
| E4 | 1.94 | 3.86 | 153.72% | 240.15% |
| E5 | 2.30 | 4.54 | 113.83% | 189.73% |
| E6 | 2.58 | 4.58 | 153.88% | 249.23% |
| E7 | 2.58 | 4.49 | 151.58% | 257.11% |
| E8 | 2.44 | 4.38 | 147.91% | 237.09% |
| E9 | 2.50 | 4.43 | 150.75% | 240.42% |
| E10 | 2.45 | 4.40 | 150.97% | 239.48% |
| E11 | 2.43 | 4.41 | 131.12% | 222.54% |
| E12 | 2.36 | 4.21 | 132.65% | 201.42% |
| E13 | 2.51 | 4.36 | 125.78% | 225.67% |
| E14 | 1.58 | 3.62 | 106.55% | 180.65% |
| E15 | 2.31 | 4.08 | 138.87% | 227.86% |
| E16 | 2.36 | 4.32 | 145.48% | 231.17% |
| E17 | 2.88 | 3.95 | 98.31% | 94.62% |
| E18 | 2.17 | 3.82 | 96.06% | 90.15% |

**Table 4**

| Specimens | Δb* | | ΔMI | |
|---|---|---|---|---|
| | 3^{rd} Extrusion | 5^{th} Extrusion | 3^{rd} Extrusion | 5^{th} Extrusion |
| CE1 | 4.40 | 7.68 | 183.87% | 377.11% |
| CE2 | 4.70 | 7.72 | 182.62% | 381.96% |
| CE3 | 3.58 | 6.65 | 187.39% | 358.10% |
| CE4 | 3.63 | 6.74 | 186.91% | 365.29% |
| CE5 | 4.54 | 7.72 | 187.41% | 382.88% |
| CE6 | 4.24 | 7.57 | 188.09% | 389.26% |
| CE7 | 4.18 | 7.50 | 185.50% | 384.89% |
| CE8 | 3.78 | 6.74 | 205.33% | 392.88% |
| CE9 | 3.60 | 6.55 | 201.60% | 389.75% |
| CE10 | 3.63 | 6.62 | 202.46% | 382.88% |
| CE11 | 3.82 | 6.60 | 175.79% | 368.26% |
| CE12 | 3.12 | 5.92 | 180.70% | 314.41% |
| CE13 | 3.99 | 6.73 | 178.09% | 374.07% |
| CE14 | 3.28 | 6.12 | 181.80% | 322.84% |
| CE15 | 3.75 | 6.45 | 188.56% | 386.12% |
| CE16 | 3.28 | 6.12 | 177.42% | 333.76% |
| CE17 | 3.28 | 6.12 | 182.91% | 336.21% |
| CE18 | 3.92 | 6. 64 | 95.11% | 87.33% |
| CE19 | 3.36 | 6.36 | 91.79% | 78.70% |
| CE20 | 4.99 | 9.89 | 177.94% | 315.65% |
| CE21 | 4.12 | 7.13 | 169.43% | 317.12% |

As shown in Tables 3 and 4, for the specimens E1-E18 prepared from the modified polymer compositions of Examples 1-18, Δb* values of the specimens after the third extrusion process are all smaller than or equal to 2.88, and Δb* values of the specimens after the fifth extrusion process are all smaller than or equal to 5.04. However, for the specimens CE1-CE21 prepared from the modified polymer compositions of Comparative Examples 1-21, Δb* values of the specimens after the third extrusion process are all larger than or equal to 3.12, and Δb* values of the specimens after the fifth extrusion process are all larger than or equal to 5.92. Evidently, the modified polymer compositions of Examples 1-18 (which were prepared using a stabilizer mixture of the disclosure) have improved color stability compared to that of the modified polymer compositions of Comparative Examples 1-21.

Particularly, each of the specimens E1 and E10 prepared from the modified polymer compositions of Examples 1 and 10 (which contain the organic phosphorus-containing antioxidant A1 and one of the sulfur-containing carboxylate salts B1 and B2) has a better color stability compared to the specimen CE11 prepared from the modified polymer composition of Comparative Example 11 (which also contains the organic phosphorus-containing antioxidant A1, but with the sulfur-containing carboxylate ester DSTDP rather than a sulfur-containing carboxylate salt). Therefore, it can be indicated that a sulfur-containing carboxylate salt, when used in combination with an organic phosphorus-containing antioxidant, can synergistically render a modified polymer composition more resistant to coloration compared to a corresponding sulfur-containing carboxylate ester. A similar conclusion can be drawn based on the difference in color stability between the specimen E2 prepared from the modified polymer composition of Example 2 (which contains the organic phosphorus-containing antioxidant A2 and the sulfur-containing carboxylate salt B1) and the specimen CE12 prepared from the modified polymer composition of Comparative Example 12 (which also contains the organic phosphorus-containing antioxidant A2, but with the sulfur-containing carboxylate ester DSTDP rather than a sulfur-containing carboxylate salt).

Considering the processing stability in terms of melt index difference, for the specimens E1-E16 prepared from the modified polymer compositions of Examples 1-16 (which contain PP), ΔMI values of the specimens after the third extrusion process are all smaller than or equal to 161.58%, and ΔMI values of the specimens after the fifth extrusion process are all smaller than or equal to 258.64%. However, for the specimens CE1-CE17 and CE20-CE21 prepared from the modified polymer compositions of Comparative Examples 1-17 and 20-21 (which contain PP), ΔMI values of the specimens after the third extrusion process are all larger than or equal to 175.79%, and ΔMI values of the specimens after the fifth extrusion process are all larger than or equal to 314.41%. Evidently, the modified polymer compositions of Examples 1-16 (which were prepared using a stabilizer mixture of the disclosure) has improved processing stability compared to that of the modified polymer compositions of Comparative Examples 1-17 and 20-21.

Particularly, each of the specimens E1 and E10 prepared from the modified polymer compositions of Examples 1 and 10 (which contain the organic phosphorus-containing antioxidant A1 and one of the sulfur-containing carboxylate salts B1 and B2) has a better processing stability compared to the specimen CE11 prepared from the modified polymer composition of Comparative Example 11(which also contains the organic phosphorus-containing antioxidant A1, but with the sulfur-containing carboxylate ester DSTDP rather than a sulfur-containing carboxylate salt). Therefore, it can be indicated that a sulfur-containing carboxylate salt, when used in combination with an organic phosphorus-containing antioxidant, can synergistically render a modified polymer composition more resistant to change in melt index compared to a corresponding sulfur-containing carboxylate ester. A similar conclusion can be drawn based on the difference in processing stability between the specimen E2 prepared from the modified polymer composition of Example 2 (which contains the organic phosphorus-containing antioxidant A2 and the sulfur-containing carboxylate salt B1) and the specimen CE12 prepared from the modified polymer composition of Comparative Example 12 (which also contains the organic phosphorus-containing antioxidant A2, but with the sulfur-containing carboxylate ester DSTDP rather than a sulfur-containing carboxylate salt).

Turning to the specimens E17-E18 prepared from the modified polymer compositions of Examples 17-18 (which contain PE) and the specimens CE18-CE19 prepared from the modified polymer compositions of Comparative Examples 18-19 (which contain PE), the processing stability of the modified polymer compositions made from PE is described below in terms of melt index difference. However, it should be noted that in evaluating processing stability, a specimen made from PE and a specimen made from PP are viewed differently due to their difference in properties (such as degree of crosslinking and tendency to crack). To be specific, the MI value of a specimen made from PP normally increases with the number of times which extrusion is conducted (i.e. the greater the number of times which extrusion is conducted, the larger the ΔMI value is), while the MI value of a specimen made from PE normally decreases with the number of times which extrusion is conducted (i.e. the greater the number of times which extrusion is conducted, the smaller the ΔMI value is). Therefore, a specimen made from PP exhibits satisfactory processing stability if its Δ MI value does not drastically increase with the number of times which extrusion is conducted, while a specimen made from PE exhibits satisfactory processing stability if its Δ MI value does not drastically decrease with the number of times which extrusion is conducted.

For the specimens E17-E18 (made from PE), Δ MI values of the specimens after the third extrusion process are both larger than or equal to 96.06%, and ΔMI values of the specimens after the fifth extrusion process are both larger than or equal to 90.15%. However, for the specimens CE18-CE19 (made from PE), ΔMI values of the specimens after the third extrusion process are both smaller than or equal to 95.11%, and ΔMI values of the specimens after the fifth extrusion process are both smaller than or equal to 87.33%. Evidently, the modified polymer compositions of Examples 17-18 (which were prepared using a stabilizer mixture of the disclosure) has improved processing stability compared to that of the modified polymer compositions of Comparative Examples 18-19.

In addition to the aforesaid processing stability provided by the stabilizer mixture of the present disclosure as illustrated by the ΔMI values in Table 3, the MI values of the specimens E1-E18 prepared from the modified polymer compositions of Examples 1-18, which were used to calculate the ΔMI values in Table 3, are shown in Table 5 for further demonstrating the meritorious effect of the stabilizer mixture of the present disclosure.

**Table 5**

| Specimens | MI | | |
|---|---|---|---|
| | 1^{th} Extrusion | 3^{rd} Extrusion | 5^{th} Extrusion |
| E1 | 0.2803 | 0.4529 | 0.7250 |
| E2 | 0.2624 | 0.3908 | 0.6173 |
| E3 | 0.2616 | 0.2938 | 0.4781 |
| E4 | 0.2933 | 0.4509 | 0.7044 |
| E5 | 0.3142 | 0.3577 | 0.5961 |
| E6 | 0.3184 | 0.4900 | 0.7935 |
| E7 | 0.3008 | 0.4560 | 0.7734 |
| E8 | 0.2794 | 0.4133 | 0.6624 |
| E9 | 0.3145 | 0.4741 | 0.7561 |
| E10 | 0.2911 | 0.4395 | 0.6971 |
| E11 | 0.3082 | 0.4041 | 0.6859 |
| E12 | 0.3025 | 0.4013 | 0.6093 |
| E13 | 0.2838 | 0.3570 | 0.6405 |
| E14 | 0.2249 | 0.2396 | 0.4063 |
| E15 | 0.3025 | 0.4201 | 0.6893 |
| E16 | 0.2417 | 0.3516 | 0.5587 |
| E17 | 9.157 | 9.002 | 8.664 |
| E18 | 9.158 | 8.797 | 8.256 |

The low MI values of the specimens E1-E16 shown in Table 5 indicate that the stabilizer mixture of the present disclosure can impart a satisfactory physical property to a polymer composition made from PP (i.e. the lower the MI value is, the better the physical property of a polymer composition made from PP is), and the high MI values of the specimens E17-E18 shown in Table 5 indicate that the stabilizer mixture of the present disclosure can also impart a satisfactory physical property to a polymer composition made from PE (i.e. the higher the MI value is, the better the physical property of a polymer composition made from PE is). Moreover, the following comparison between the specimens made from PP can further demonstrate the effect of the stabilizer mixture of the present disclosure on the physical property of a polymer composition. Compared to the specimen CE11 (containing the organic phosphorus-containing antioxidant A1, but with the sulfur-containing carboxylate ester DSTDP rather than a sulfur-containing carboxylate salt), the MI values of which after the first, third, and fifth extrusion processes are 0.3828, 0.6729, and 1.4097, each of the specimens E1 and E10 (which contain the organic phosphorus-containing antioxidant A1 and one of the sulfur-containing carboxylate salts B1 and B2) has a lower MI value after several times of extrusion. Likewise, compared to the specimen CE12 (containing the organic phosphorus-containing antioxidant A2, but with the sulfur-containing carboxylate ester DSTDP rather than a sulfur-containing carboxylate salt), the MI values of which after the first, third, and fifth extrusion processes are 0.3616, 0.6534, and 1.1369, the specimen E2 (which contains the organic phosphorus-containing antioxidant A2 and the sulfur-containing carboxylate salt B1) has a lower MI value after several times of extrusion. Thus, the stabilizer mixture of the present disclosure not only provides processing stability for a polymer composition, but also confers a satisfactory physical property on the polymer composition.

In the description above, for the purposes of explanation, numerous specific details have been set forth in order to provide a thorough understanding of the embodiment (s) . It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A stabilizer mixture for modifying an olefin-based polymer, the stabilizer mixture **characterized by**:
at least one organic phosphorus-containing antioxidant represented by a formula selected from the group consisting of formulae (1), (2), (3), (4), (5), (6), (7), and (8), 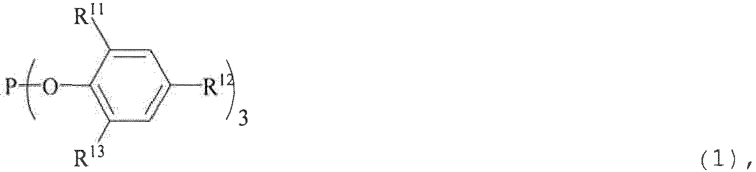 wherein R¹¹, R¹², and R¹³ are independently selected from the group consisting of hydrogen, a tert-butyl group, an isopropylphenyl group, and a linear C₁-C₈ alkyl group, 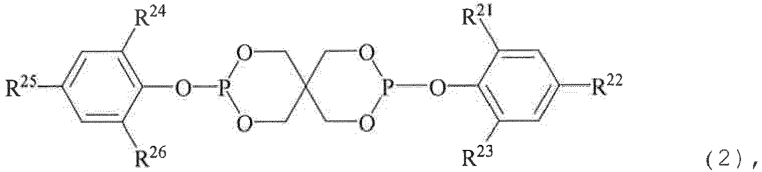 wherein R²¹, R²², R²³, R²⁴, R²⁵, and R²⁶ are independently selected from the group consisting of hydrogen, a tert-butyl group, an isopropylphenyl group, and a linear C₁-C₈ alkyl group, 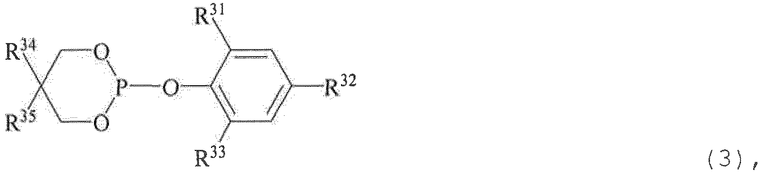 wherein R³¹, R³², R³³, R³⁴, and R³⁵ are independently selected from the group consisting of hydrogen, a tert-butyl group, an isopropylphenyl group, and a linear C₁-C₈ alkyl group, 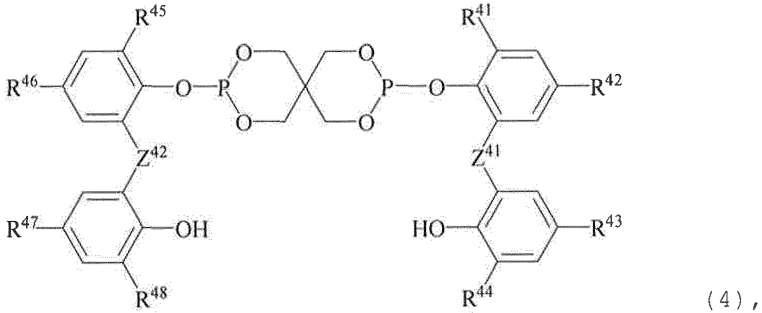 wherein
R⁴¹, R⁴², R⁴³, R⁴⁴, R⁴⁵, R⁴⁶, R⁴⁷, and R⁴⁸ are independently selected from the group consisting of hydrogen, a tert-butyl group, an isopropylphenyl group, and a linear C₁-C₈ alkyl group, and
Z⁴¹ and Z⁴² are independently selected from the group consisting of O, S, and a C₁-C₄ alkylene group, 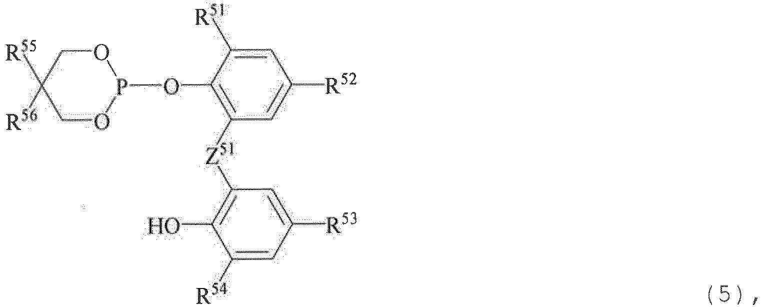
wherein
R⁵¹, R⁵², R⁵³, R⁵⁴, R⁵⁵, and R⁵⁶ are independently selected from the group consisting of hydrogen, a tert-butyl group, an isopropylphenyl group, and a linear C₁-C₈ alkyl group, and
Z⁵¹ is selected from the group consisting of O, S, and a C₁-C₄ alkylene group, 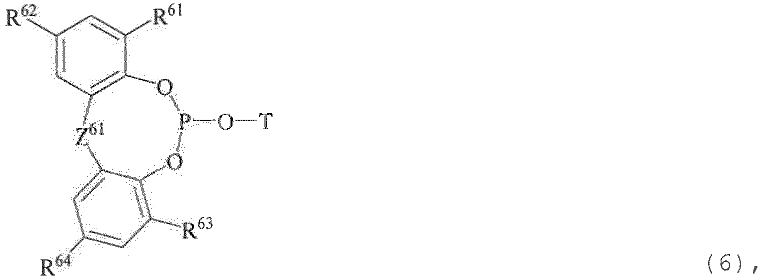
wherein
R⁶¹, R⁶², R⁶³, and R⁶⁴ are independently selected from the group consisting of hydrogen, a tert-butyl group, an isopropylphenyl group, and a linear C₁-C₈ alkyl group,
T is selected from the group consisting of a C₁-C₁₈ hydrocarbon group and a group represented by 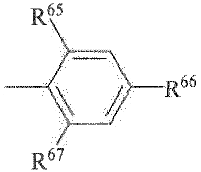 where R⁶⁵, R⁶⁵, and R⁶⁷ are independently selected from the group consisting of hydrogen, a tert-butyl group, an isopropylphenyl group, and a linear C₁-C₈ alkyl group, and
Z⁶¹ is selected from the group consisting of O, S, and a C₁-C₄ alkylene group, 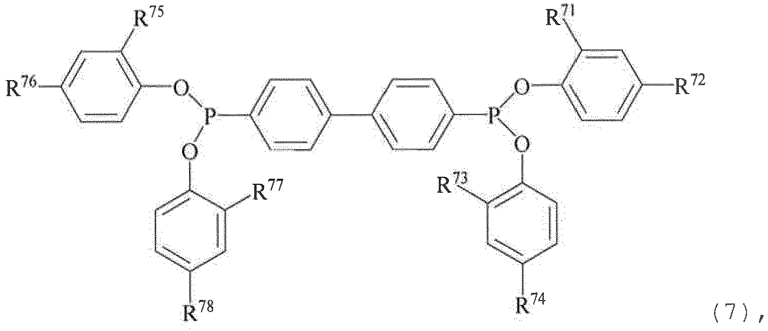
wherein R⁷¹, R⁷², R⁷³, R⁷⁴, R⁷⁵, R⁷⁶, R⁷⁷, and R⁷⁸ are independently selected from the group consisting of hydrogen, a tert-butyl group, an isopropylphenyl group, and a linear C₁-C₈ alkyl group, and 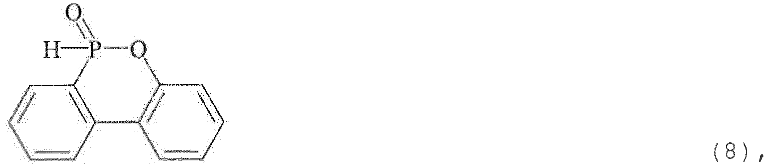 and
at least one sulfur-containing carboxylate salt,
wherein:
if the at least one organic phosphorus-containing antioxidant is represented by a formula selected from the group consisting of formulae (2), (3), (4), (5), (6), (7), and (8), the at least one sulfur-containing carboxylate salt is represented by a formula selected from the group consisting of formulae (9), (10), (11), and (12); and
if the at least one organic phosphorus-containing antioxidant is represented by formula (1), the at least one sulfur-containing carboxylate salt is represented by a formula selected from the group consisting of formulae (10) and (12), 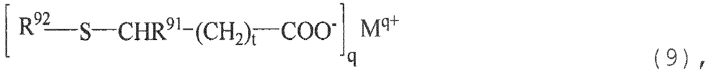
wherein
R⁹¹ is selected from the group consisting of hydrogen and a C₁-C₁₈ alkyl group,
R⁹² is selected from the group consisting of a C₁-C₃₀ alkyl group and a C₆-C₁₈ aryl group,
M^{q+} is selected from the group consisting of Ca²⁺, Ba²⁺, Mg²⁺, Zn²⁺, and Al³⁺,
q is an integer of 2 or 3, and
t is an integer ranging from 0 to 6, 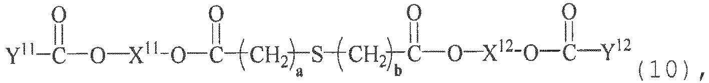
wherein
X¹¹ and X¹² are independently selected from the group consisting of Ca²⁺, Ba²⁺, Mg²⁺, and Zn²⁺,
Y¹¹ and Y¹² are independently selected from the group consisting of a C₁-C₃₀ alkyl group and a C₆-C₁₈ aryl group, and
a and b are independently an integer ranging from 1 to 6, 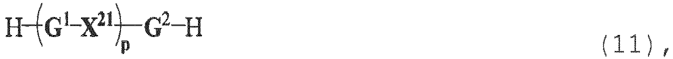
wherein
X²¹ is selected from the group consisting of Ca²⁺, Ba²⁺, Mg²⁺, and Zn²⁺,
G¹ and G² independently represent 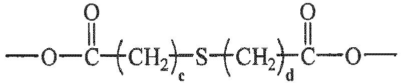 where c and d are independently an integer ranging from 1 to 6, and
p is an integer ranging from 1 to 9 on the proviso that a plurality of G¹ are the same or different and a plurality of X²¹ are the same or different when p is an integer equal to or larger than 2,
and 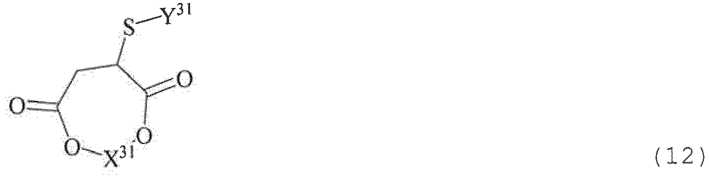
wherein
X³¹ is selected from the group consisting of Ca²⁺, Ba²⁺, Mg²⁺, and Zn²⁺, and
Y³¹ is selected from the group consisting of a C₁-C₃₀ alkyl group, a C₆-C₁₈ aryl group, and a group represented by R⁹³OOC- (CH₂)ₖ- where R⁹³ is selected from the group consisting of a C₁-C₃₀ alkyl group and a C₆-C₁₈ aryl group, and k is an integer ranging from 1 to 5.

2. The stabilizer mixture according to Claim 1, **characterized in that**:
R⁹¹ represents hydrogen, and
R⁹² is selected from the group consisting of a C₁-C₁₈ alkyl group and a C₆-C₁₈ aryl group.

3. The stabilizer mixture according to Claim 2, **characterized in that** R⁹² is dodecyl.

4. The stabilizer mixture according to Claim 1, further **characterized by** an antioxidant that is selected from the group consisting of a hindered phenolic antioxidant, a benzofuranone-based antioxidant, an amine oxide-based antioxidant, and combinations thereof.

5. The stabilizer mixture according to Claim 4, **characterized in that** the hindered phenolic antioxidant is selected from the group consisting of pentaerythritol-tetra-[β-(3,5-di-tert-butyl-4-hydroxyphenyl)-propionate],
ethylenebis(oxyethylene)bis[β-(3-tert-butyl-4-hydroxy-5-methylphenyl)propionate], 1,3,5-trimethyl-2,4,6-tris(3,5-di-tert-butyl-4-hydroxybenzyl)benzene, 1,3,5-tris (3,5-di-tert-butyl-4-hydroxybenzyl) isocyanurate, tris(butylcresol)butane, 4,4'-butylidenebis(6-tert-butyl-3-methylphenol), N,N'-bis[3-(3,5-di-tert-butyl-4-hydroxyphenyl)propionyl] hydrazide, N,N'-bis-[3-(3,5-di-tert-butyl-4-hydroxyphenyl)propionyl]hexamethylene diamine, 2,2'-methylenebis-(4-methyl-6-tert-butylphenol), octyl-3,5-di-tert-butyl-4-hydroxy-hydrocinnamate, 1,2-di[-(3,5-di-tert-butyl-4-hydroxyphenyl)propionyl]hydrazide, 2,2'-oxamidobis[ethyl-3-(3,5-di-t-butyl-4-hydroxyphenyl)propionate], and combinations thereof.

6. The stabilizer mixture according to Claim 4, **characterized in that** the benzofuranone-based antioxidant is selected from the group consisting of xylyl dibutylbenzofuranone, 5-(tert-butyl)-3-[5-(tert-butyl)-2-hydroxyphenyl]benzofuran-2(3H)-one, 3-[3,5-bis(1,1-dimethylethyl)-2-hydroxyphenyl]-5,7-bis(1,1-dimethylethyl)-2(3H)-benzofuranone, and combinations thereof.

7. The stabilizer mixture according to Claim 4, **characterized in that** the amine oxide-based antioxidant is selected from the group consisting of oxidized bis(hydrogenated tallow alkyl)amine, bis(octadecyl)hydroxylamine, and a combination thereof.

8. The stabilizer mixture according to Claim 1, further **characterized by** an additive that is selected from the group consisting of an antacid agent, a metal deactivating agent, and a combination thereof.

9. The stabilizer mixture according to Claim 8, **characterized in that** the antacid agent is a fatty acid salt.

10. The stabilizer mixture according to Claim 8, **characterized in that** the metal deactivating agent is oxalyl-bis(benzylidene)hydrazide.

11. A modified polymer composition, **characterized by**:
an olefin-based polymer selected from the group consisting of polyolefin, ethylene-vinyl acetate copolymer, and a combination thereof; and
the stabilizer mixture according to any one of Claims 1 to 10.

12. The modified polymer composition according to Claim 11, **characterized in that** said stabilizer mixture is present in an amount ranging from 0.01 to 2.2 parts by weight based on 100 parts by weight of said olefin-based polymer.

13. The modified polymer composition according to Claim 11, **characterized in that** said polyolefin is selected from the group consisting of polyethylene, polypropylene, and a combination thereof.

14. Use of a stabilizer mixture for modifying an olefin-based polymer selected from the group consisting of polyolefin, ethylene-vinyl acetate copolymer, and a combination thereof, the use being **characterized in that** the stabilizer mixture comprises:
at least one organic phosphorus-containing antioxidant represented by a formula selected from the group consisting of formulae (1), (2), (3), (4), (5), (6), (7), and (8), 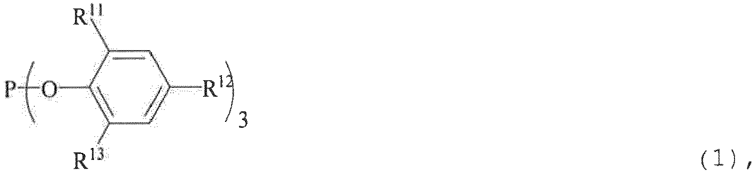 wherein R¹¹, R¹², and R¹³ are independently selected from the group consisting of hydrogen, a tert-butyl group, an isopropylphenyl group, and a linear C₁-C₈ alkyl group, 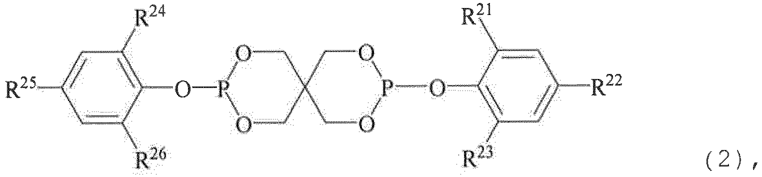 wherein R²¹, R²², R²³, R²⁴, R²⁵, and R²⁶ are independently selected from the group consisting of hydrogen, a tert-butyl group, an isopropylphenyl group, and a linear C₁-C₈ alkyl group, 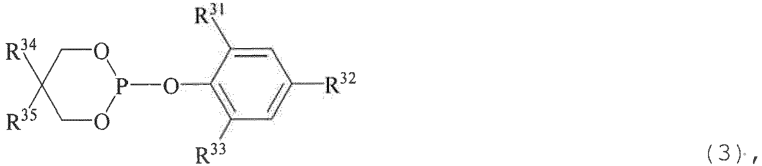 wherein R³¹, R³², R³³, R³⁴, and R³⁵ are independently selected from the group consisting of hydrogen, a tert-butyl group, an isopropylphenyl group, and a linear C₁-C₈ alkyl group, 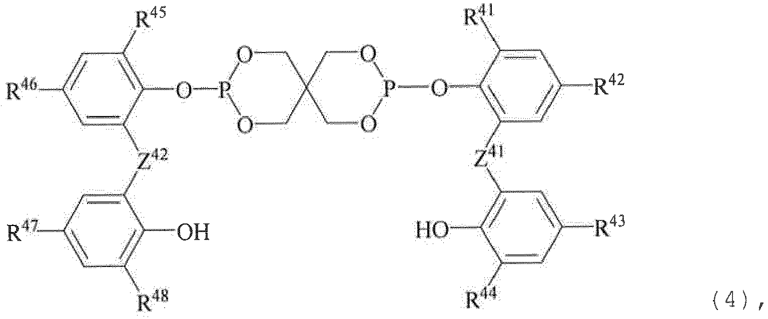 wherein
R⁴¹, R⁴², R⁴³, R⁴⁴, R⁴⁵, R⁴⁶, R⁴⁷, and R⁴⁸ are independently selected from the group consisting of hydrogen, a tert-butyl group, an isopropylphenyl group, and a linear C₁-C₈ alkyl group, and
Z⁴¹ and Z⁴² are independently selected from the group consisting of O, S, and a C₁-C₄ alkylene group, 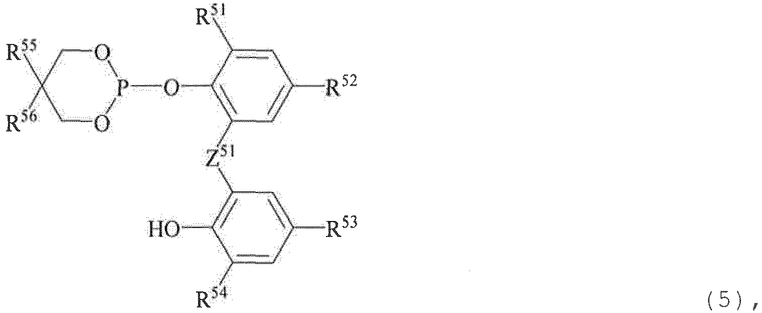 wherein
R⁵¹, R⁵², R⁵³, R⁵⁴, R⁵⁵, and R⁵⁶ are independently selected from the group consisting of hydrogen, a tert-butyl group, an isopropylphenyl group, and a linear C₁-C₈ alkyl group, and
Z⁵¹ is selected from the group consisting of O, S, and a C₁-C₄ alkylene group, 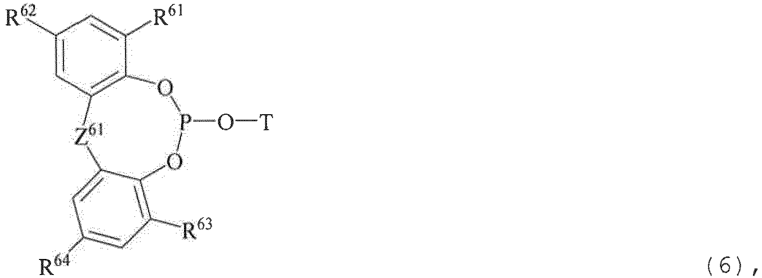
wherein
R⁶¹, R⁶², R⁶³, and R⁶⁴ are independently selected from the group consisting of hydrogen, a tert-butyl group, an isopropylphenyl group, and a linear C₁-C₈ alkyl group,
T is selected from the group consisting of a C₁-C₁₈ hydrocarbon group and a group represented by 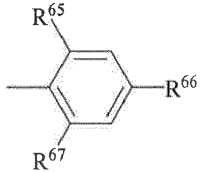 where R⁶⁵, R⁶⁶, and R⁶⁷ are independently selected from the group consisting of hydrogen, a tert-butyl group, an isopropylphenyl group, and a linear C₁-C₈ alkyl group, and
Z⁶¹ is selected from the group consisting of O, S, and a C₁-C₄ alkylene group, 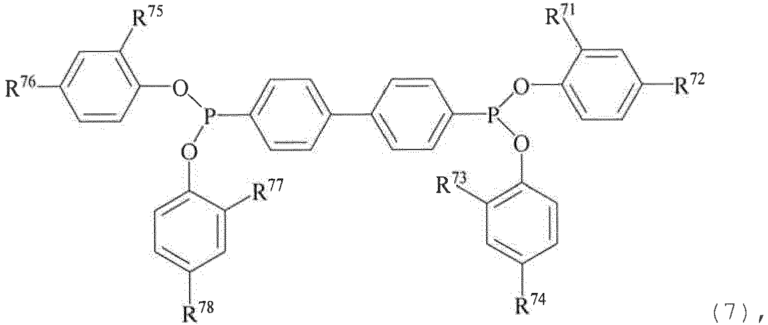
wherein R⁷¹, R⁷², R⁷³, R⁷⁴, R⁷⁵, R⁷⁶, R⁷⁷, and R⁷⁸ are independently selected from the group consisting of hydrogen, a tert-butyl group, an isopropylphenyl group, and a linear C₁-C₈ alkyl group, and 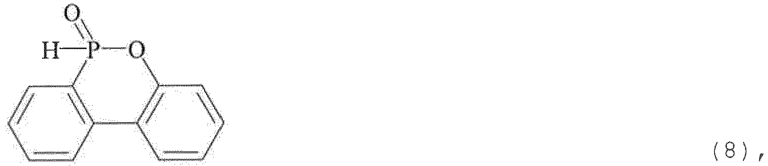 and
at least one sulfur-containing carboxylate salt, wherein:
if the at least one organic phosphorus-containing antioxidant is represented by a formula selected from the group consisting of formulae (2), (3), (4), (5), (6), (7), and (8), the at least one sulfur-containing carboxylate salt is represented by a formula selected from the group consisting of formulae (9), (10), (11), and (12); and
if the at least one organic phosphorus-containing antioxidant is represented by formula (1), the at least one sulfur-containing carboxylate salt is represented by a formula selected from the group consisting of formulae (9), (10) and (12), 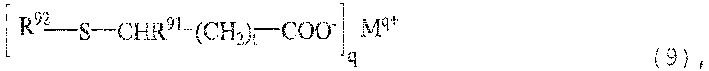
wherein
R⁹¹ is selected from the group consisting of hydrogen and a C₁-C₁₈ alkyl group,
R⁹² is selected from the group consisting of a C₁-C₃₀ alkyl group and a C₆-C₁₈ aryl group,
M^{q+} is selected from the group consisting of Ca²⁺, Ba²⁺, Mg²⁺, Zn²⁺, and Al³⁺,
q is an integer of 2 or 3, and
t is an integer ranging from 0 to 6, 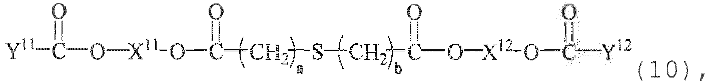
wherein
X¹¹ and X¹² are independently selected from the group consisting of Ca²⁺, Ba²⁺, Mg²⁺, and Zn²⁺,
Y¹¹ and Y¹² are independently selected from the group consisting of a C₁-C₃₀ alkyl group and a C₆-C₁₈ aryl group, and
a and b are independently an integer ranging from 1 to 6, 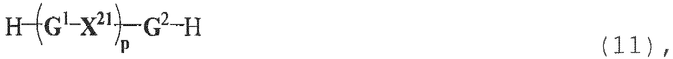
wherein
X²¹ is selected from the group consisting of Ca²⁺, Ba²⁺, Mg²⁺, and Zn²⁺,
G¹ and G² independently represent 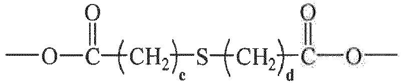 where c and d are independently an integer ranging from 1 to 6, and
p is an integer ranging from 1 to 9 on the proviso that a plurality of G¹ are the same or different and a plurality of X²¹ are the same or different when p is an integer equal to or larger than 2,
and 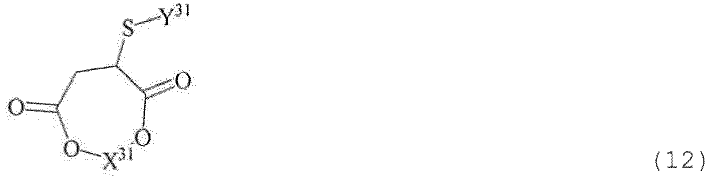
wherein
X³¹ is selected from the group consisting of Ca²⁺, Ba²⁺, Mg²⁺, and Zn²⁺, and
Y³¹ is selected from the group consisting of a C₁-C₃₀ alkyl group, a C₆-C₁₈ aryl group, and a group represented by R⁹³OOC-(CH₂)ₖ- where R⁹³ is selected from the group consisting of a C₁-C₃₀ alkyl group and a C₆-C₁₈ aryl group, and k is an integer ranging from 1 to 5.

## Patentansprüche

1. Stabilisator-Mischung zur Modifizierung von Olefin-basiertem Polymer, wobei die Stabilisator-Mischung **gekennzeichnet ist durch**:
mindestens ein organisches Phosphor-enthaltendes Antioxidationsmittel, wiedergegeben **durch** eine Formel, ausgewählt aus der Gruppe bestehend aus Formeln (1), (2), (3), (4), (5), (6), (7) und (8), 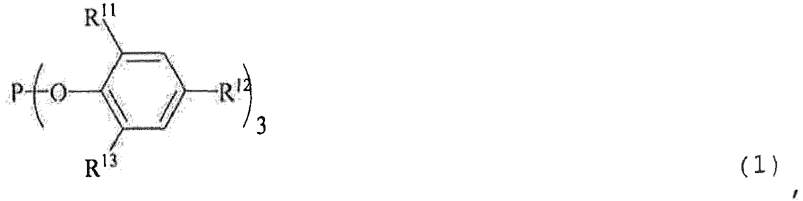 wobei R¹¹, R¹² und R¹³, unabhängig voneinander, ausgewählt sind aus der Gruppe bestehend aus Wasserstoff, einer tert-Butylgruppe, einer Isopropylphenylgruppe und einer linearen C₁-C₈-Alkylgruppe, 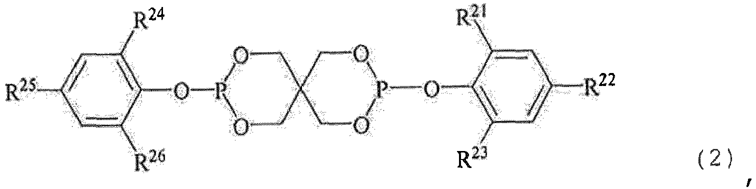 wobei R²¹, R²², R²³, R²⁴, R²⁵ und R²⁶ ausgewählt sind aus der Gruppe, bestehend aus Wasserstoff, einer tert-Butylgruppe, einer Isopropylphenylgruppe und einer linearen C₁-C₈-Alkylgruppe, 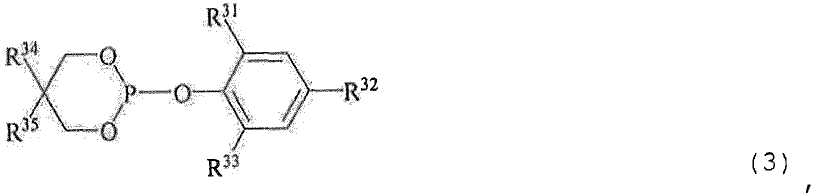 wobei R³¹, R³², R³³, R³⁴ und R³⁵ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe, 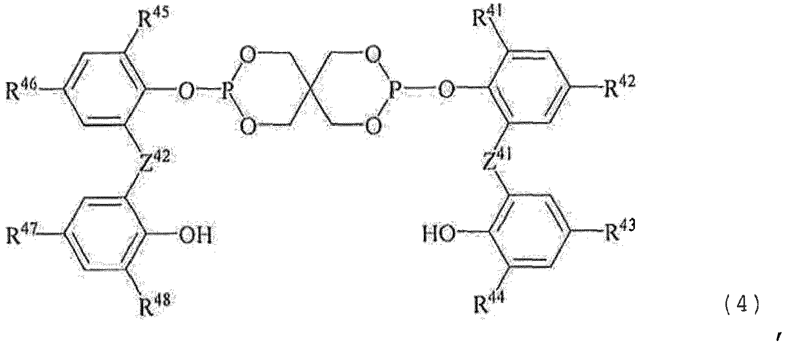 wobei
R⁴¹, R⁴², R⁴³, R⁴⁴, R⁴⁵, R⁴⁶, R⁴⁷ und R⁴⁸ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe, und
Z⁴¹ und Z⁴² sind unabhängig voneinander ausgewählt aus der Gruppe, bestehend aus O, S und einer C₁-C₄-Alkylengruppe, 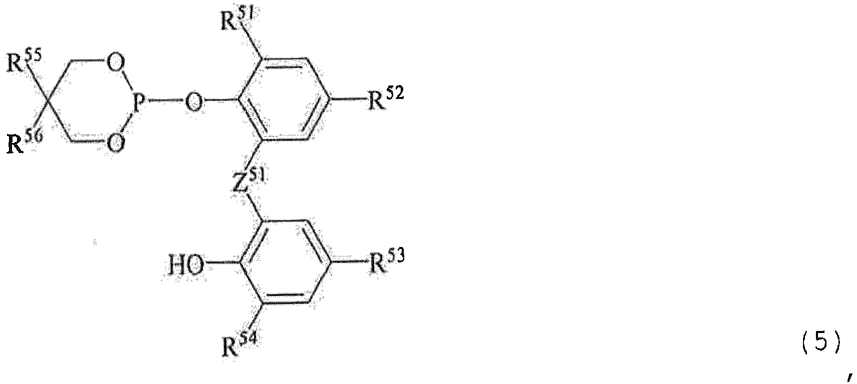
wobei
R⁵¹, R⁵², R⁵³, R⁵⁴, R⁵⁵ und R⁵⁶ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe, und
Z⁵¹ ist ausgewählt aus der Gruppe, bestehend aus O, S und einer C₁-C₄-Alkylengruppe, 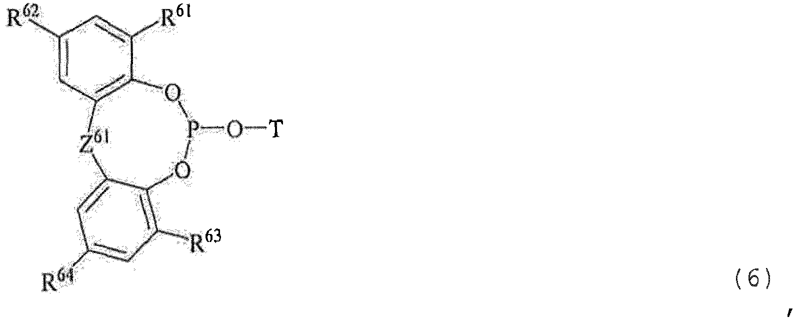
wobei
R⁶¹, R⁶², R⁶³ und R⁶⁴ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe,
T ist ausgewählt aus der Gruppe, bestehend aus einer C₁-C₁₈-Kohlenwasserstoffgruppe und einer Gruppe, wiedergegeben **durch** 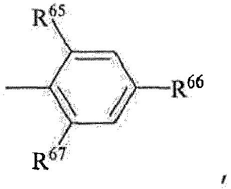
wobei R⁶⁵, R⁶⁶ und R⁶⁷ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe, und
Z⁶¹ ist ausgewählt aus der Gruppe, bestehend aus O, S und einer C₁-C₄-Alkylengruppe, 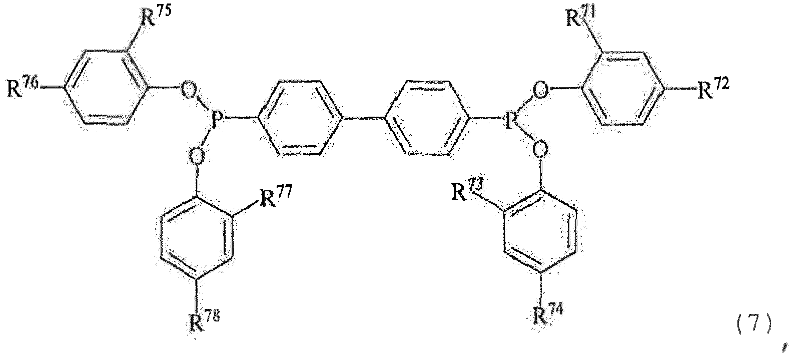
wobei R⁷¹, R⁷², R⁷³, R⁷⁴, R⁷⁵, R⁷⁶, R⁷⁷ und R⁷⁸ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe, und 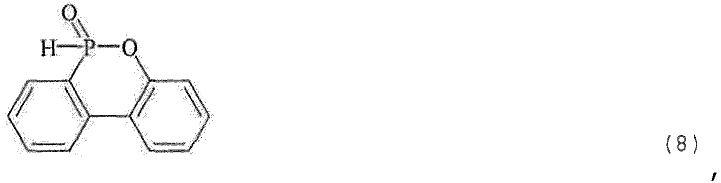 und
mindestens einem Schwefel-enthaltenden Carboxylatsalz, wobei:
wenn das mindestens eine organische Phosphor-enthaltende Antioxidationsmittel wiedergegeben ist **durch** eine Formel, ausgewählt aus der Gruppe bestehend aus Formeln (2), (3), (4), (5), (6), (7) und (8), ist das mindestens eine Schwefel-enthaltende Carboxylatsalz, wiedergegeben **durch** eine Formel, ausgewählt aus der Gruppe bestehend aus Formeln (9), (10), (11) und (12); und
wenn das mindestens eine organische Phosphor-enthaltende Antioxidationsmittel wiedergegeben ist **durch** Formel (1), ist das mindestens eine Schwefel-enthaltende Carboxylatsalz wiedergegeben **durch** eine Formel, ausgewählt aus der Gruppe bestehend aus Formeln (10) und (12), 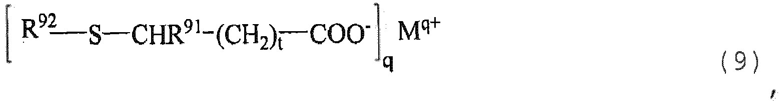
wobei
R⁹¹ ausgewählt ist aus der Gruppe, bestehend aus Wasserstoff und einer C₁-C₁₈-Alkylgruppe,
R⁹² ist ausgewählt aus der Gruppe, bestehend aus einer C₁-C₃₀-Alkylgruppe und einer C₆-C₁₈-Arylgruppe,
M^{q+} ist ausgewählt aus der Gruppe, bestehend aus Ca²⁺, Ba²⁺, Mg²⁺, Zn²⁺ und Al³⁺,
q ist eine Ganzzahl von 2 oder 3, und
t ist eine Ganzzahl in einem Bereich von 0 bis 6, 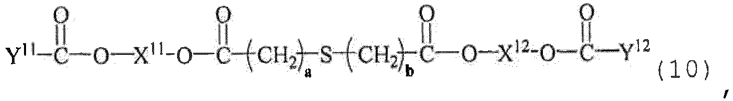
wobei
X¹¹ und X¹² unabhängig voneinander ausgewählt sind aus der Gruppe, bestehend aus Ca²⁺, Ba²⁺, Mg²⁺ und Zn²⁺,
Y¹¹ und Y¹² sind unabhängig voneinander ausgewählt aus der Gruppe, bestehend aus einer C₁-C₃₀-Alkylgruppe und einer C₆-C₁₈-Arylgruppe, und
a und b sind unabhängig voneinander eine Ganzzahl in einem Bereich von 1 bis 6, 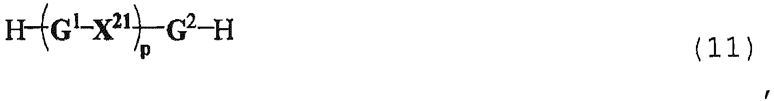
wobei
X²¹ ausgewählt ist aus der Gruppe, bestehend aus Ca²⁺, Ba²⁺, Mg²⁺, and Zn²⁺,
G¹ und G² unabhängig voneinander stehen für 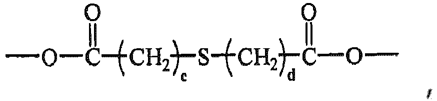
wobei c und d unabhängig voneinander eine Ganzzahl in einem Bereich von 1 bis 6 sind, und
p ist eine Ganzzahl in einem Bereich von 1 bis 9, mit der Maßgabe, dass eine Vielzahl von G¹ gleich oder verschieden sind und eine Vielzahl von X²¹ gleich oder verschieden sind, wenn p eine Ganzzahl gleich zu oder größer als 2 ist,
und 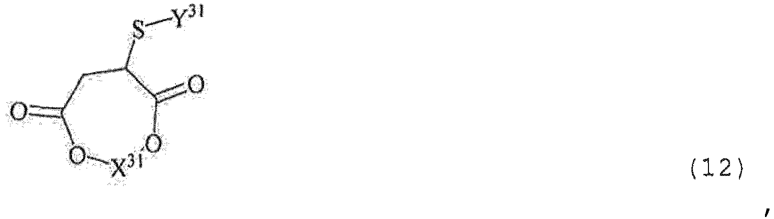
wobei
X³¹ ausgewählt ist aus der Gruppe, bestehend aus Ca²⁺, Ba²⁺, Mg²⁺ und Zn²⁺, und
Y³¹ ist ausgewählt aus der Gruppe, bestehend aus einer C₁-C₃₀-Alkylgruppe, einer C₆-C₁₈-Arylgruppe und einer Gruppe, wiedergegeben **durch** R⁹³OOC-(CH₂)ₖ-, wobei R⁹³ ausgewählt ist aus der Gruppe, bestehend aus einer C₁-C₃₀-Alkylgruppe und einer C₆-C₁₈-Arylgruppe, und k ist eine Ganzzahl in einem Bereich von 1 bis 5.

2. Stabilisator-Mischung nach Anspruch 1, **gekennzeichnet dadurch, dass**:
R⁹¹ für Wasserstoff steht, und
R⁹² ist ausgewählt aus der Gruppe, bestehend aus einer C₁-C₁₈-Alkylgruppe und C₆-C₁₈-Arylgruppe.

3. Stabilisator-Mischung nach Anspruch 2, **gekennzeichnet dadurch, dass** R⁹² Dodecyl ist.

4. Stabilisator-Mischung nach Anspruch 1, weiterhin **gekennzeichnet durch** ein Antioxidationsmittel, das ausgewählt ist aus der Gruppe, bestehend aus einem gehinderten phenolischen Antioxidationsmittel, einem Benzofuranon-basierten Antioxidationsmittel, einem Aminoxid-basierten Antioxidationsmittel und Kombinationen davon.

5. Stabilisator-Mischung nach Anspruch 4, **dadurch gekennzeichnet, dass** das gehinderte phenolische Antioxidationsmittel ausgewählt ist aus der Gruppe, bestehend aus Pentaerythritol-tetra-[β-(3,5-di-tert-butyl-4-hydroxyphenyl)-propionat], Ethylenbis(oxyethylen)bis[β-(3-tert-butyl-4-hydroxy-5-methylphenyl)propionat], 1,3,5-Trimethyl-2,4,6-tris(3,5-di-tert-butyl-4-hydroxybenzyl)benzen, 1,3,5-Tris(3,5-di-tert-butyl-4-hydroxybenzyl)isocyanurat, Tris(butylcresol)butan, 4,4'-Butylidenbis(6-tert-butyl-3-methylphenol), N,N'-Bis[3-(3,5-di-tert-butyl-4-hydroxyphenyl)propionyl]hydrazid, N,N'-Bis-[3-(3,5-di-tert-butyl-4-hydroxyphenyl)propionyl]hexamethylendiamin, 2,2'-Methylenbis-(4-methyl-6-tert-butylphenol), Octyl-3,5-di-tert-butyl-4-hydroxy-hydrocinnamat, 1,2-Di[-(3,5-di-tert-butyl-4-hydroxyphenyl)propion-yl]hydrazid, 2,2'-Oxamidobis[ethyl-3-(3,5-di-t- butyl-4-hydroxyphenyl)propionat] und Kombinationen davon.

6. Stabilisator-Mischung nach Anspruch 4, **dadurch gekennzeichnet, dass** das Benzofuranon-basierte Antioxidationsmittel ausgewählt ist aus der Gruppe, bestehend aus Xylyldibutylbenzofuranon, 5-(tert-Butyl)-3-[5-(tert-butyl)-2-hydroxyphenyl]benzofuran-2(3H)-on, 3-[3,5-Bis(1,1-dimethylethyl)-2-hydroxyphenyl]-5,7-bis(1,1-dimethylethyl)-2(3H)-benzofuranon und Kombinationen davon.

7. Stabilisator-Mischung nach Anspruch 4, **dadurch gekennzeichnet, dass** das Aminoxid-basierte Antioxidationsmittel ausgewählt ist aus der Gruppe, bestehend aus oxidiertem Bis(hydrogenierten Talg-Alkyl)amin, Bis(octadecyl)hydroxylamin und einer Kombination davon.

8. Stabilisator-Mischung nach Anspruch 1, weiterhin **gekennzeichnet dadurch, dass** ein Additiv ausgewählt ist aus der Gruppe, bestehend aus einem Antacidmittel, einem metalldeaktivierenden Mittel und einer Kombination davon.

9. Stabilisator-Mischung nach Anspruch 8, **dadurch gekennzeichnet, dass** das Antacidmittel ein Fettsäuresalz ist.

10. Stabilisator-Mischung nach Anspruch 8, **dadurch gekennzeichnet, dass** das metalldeaktivierende Mittel Oxalyl-bis(benzyliden)hydrazid ist.

11. Modifizierte Polymerzusammensetzung, **gekennzeichnet durch**:
ein Olefin-basiertes Polymer, ausgewählt aus der Gruppe, bestehend aus Polyolefin, Ethylenvinylacetat-Copolymer und einer Kombination davon; und
die Stabilisator-Mischung nach irgendeinem der Ansprüche 1 bis 10.

12. Modifizierte Polymerzusammensetzung nach Anspruch 11, **dadurch gekennzeichnet, dass** die Stabilisator-Mischung in einer Menge in einem Bereich von 0,01 bis 2,2 Gewichtsteilen, bezogen auf 100 Gewichtsteile des Olefin-basierten Polymers, vorliegt.

13. Modifizierte Polymerzusammensetzung nach Anspruch 11, **dadurch gekennzeichnet, dass** das Polyolefin ausgewählt ist aus der Gruppe, bestehend aus Polyethylen, Polypropylen und einer Kombination davon.

14. Verwendung einer Stabilisator-Mischung zur Modifizierung eines Olefin-basierten Polymers, ausgewählt aus der Gruppe bestehend aus Polyolefin, Ethylenvinylacetat-Copolymer und einer Kombination davon, wobei die Verwendung **dadurch gekennzeichnet ist, dass** die Stabilisator-Mischung umfasst:
mindestens ein organisches Phosphor-enthaltendes Antioxidationsmittel, wiedergegeben durch eine Formel, ausgewählt aus der Gruppe bestehend aus Formeln (1), (2), (3), (4), (5), (6), (7) und (8), 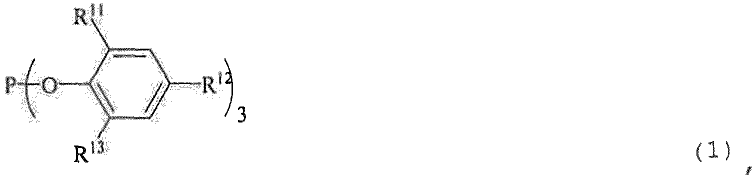 wobei R¹¹, R¹² und R¹³ unabhängig voneinander ausgewählt sind aus der Gruppe bestehend aus Wasserstoff, einer tert-Butylgruppe, einer Isopropylphenylgruppe und einer linearen C₁-C₈-Alkylgruppe, 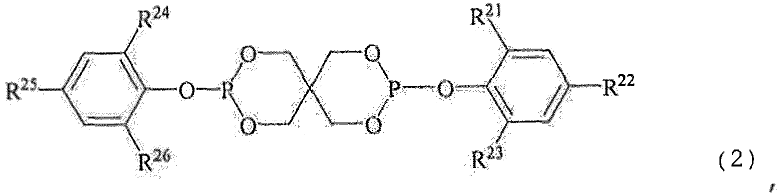 wobei R²¹, R²², R²³, R²⁴, R²⁵ und R²⁶ ausgewählt sind aus der Gruppe, bestehend aus Wasserstoff, einer tert-Butylgruppe, einer Isopropylphenylgruppe und einer linearen C₁-C₈-Alkylgruppe, 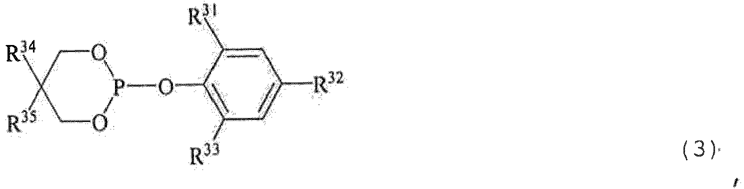 wobei R³¹, R³², R³³, R³⁴ und R³⁵ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe, 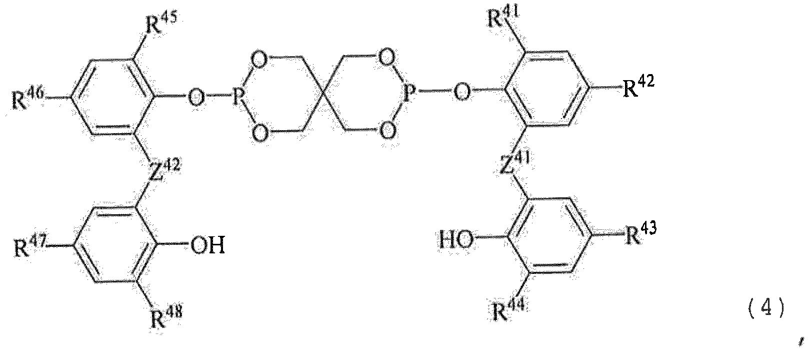 wobei
R⁴¹, R⁴², R⁴³, R⁴⁴, R⁴⁵, R⁴⁶, R⁴⁷ und R⁴⁸ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe, und
Z⁴¹ und Z⁴² sind unabhängig voneinander ausgewählt aus der Gruppe, bestehend aus O, S und einer C₁-C₄-Alkylengruppe, 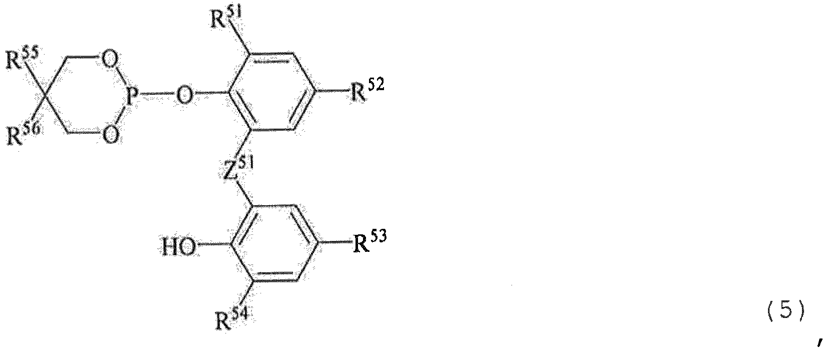
wobei
R⁵¹, R⁵², R⁵³, R⁵⁴, R⁵⁵ und R⁵⁶ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe, und
Z⁵¹ ist ausgewählt aus der Gruppe, bestehend aus 0, S und einer C₁-C₄-Alkylengruppe, 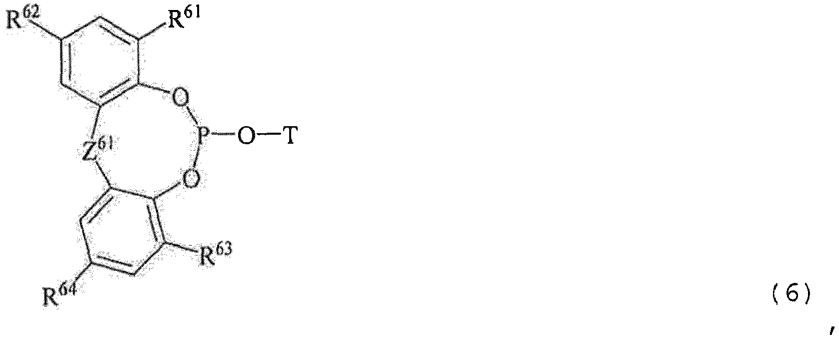
wobei
R⁶¹, R⁶², R⁶³ und R⁶⁴ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe,
T ist ausgewählt aus der Gruppe, bestehend aus einer C₁-C₁₈-Kohlenwasserstoffgruppe und einer Gruppe, wiedergegeben durch 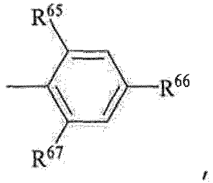
wobei R⁶⁵, R⁶⁶ und R⁶⁷ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe, und
Z⁶¹ ist ausgewählt aus der Gruppe, bestehend aus O, S und einer C₁-C₄-Alkylengruppe, 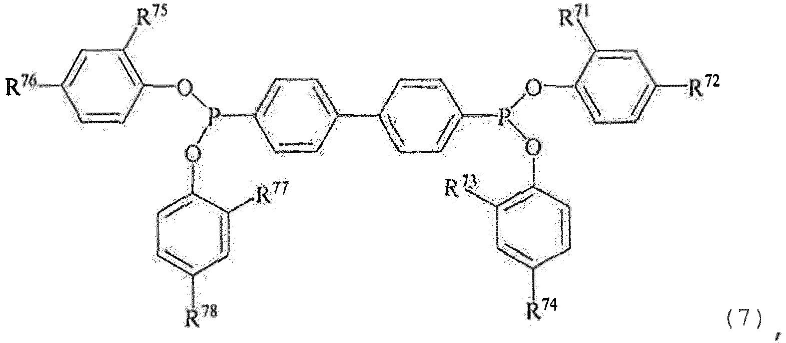
wobei R⁷¹, R⁷², R⁷³, R⁷⁴, R⁷⁵, R⁷⁶, R⁷⁷ und R⁷⁸ unabhängig voneinander ausgewählt sind aus der Gruppe, bestehend aus Wasserstoff, einer tert-Butylgruppe, einer Isopropylphenylgruppe und einer linearen C₁-C₈-Alkylgruppe, und 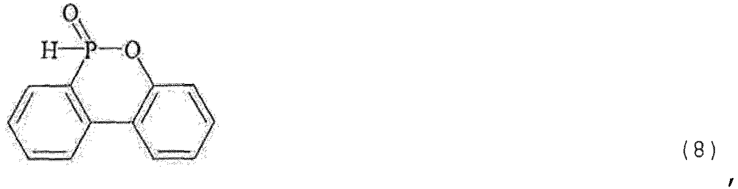 und
mindestens einem Schwefel-enthaltenden Carboxylatsalz, wobei:
wenn das mindestens eine organische Phosphor-enthaltende Antioxidationsmittel wiedergegeben ist durch eine Formel, ausgewählt aus der Gruppe bestehend aus Formeln (2), (3), (4), (5), (6), (7) und (8), ist das mindestens eine Schwefel-enthaltende Carboxylatsalz, wiedergegeben durch eine Formel, ausgewählt aus der Gruppe bestehend aus Formeln (9), (10), (11) und (12); und
wenn das mindestens eine organische Phosphor-enthaltende Antioxidationsmittel wiedergegeben ist durch Formel (1), ist das mindestens eine Schwefel-enthaltende Carboxylatsalz wiedergegeben durch eine Formel, ausgewählt aus der Gruppe bestehend aus Formeln (9), (10) und (12), 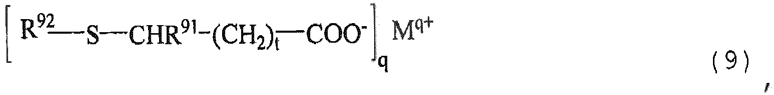
wobei
R⁹¹ ausgewählt ist aus der Gruppe, bestehend aus Wasserstoff und einer C₁-C₁₈-Alkylgruppe,
R⁹² ist ausgewählt aus der Gruppe, bestehend aus einer C₁-C₃₀-Alkylgruppe und einer C₆-C₁₈-Arylgruppe,
M^{q+} ist ausgewählt aus der Gruppe, bestehend aus Ca²⁺, Ba²⁺, Mg²⁺, Zn²⁺ und Al³⁺,
q ist eine Ganzzahl von 2 oder 3, und
t ist eine Ganzzahl in einem Bereich von 0 bis 6, 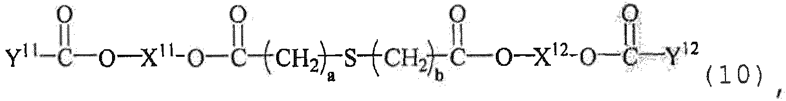
wobei
X¹¹ und X¹² unabhängig voneinander ausgewählt sind aus der Gruppe, bestehend aus Ca²⁺, Ba²⁺, Mg²⁺ und Zn²⁺,
Y¹¹ und Y¹² sind unabhängig voneinander ausgewählt aus der Gruppe, bestehend aus einer C₁-C₃₀-Alkylgruppe und einer C₆-C₁₈-Arylgruppe, und
a und b sind unabhängig voneinander eine Ganzzahl in einem Bereich von 1 bis 6, 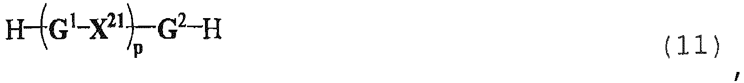
wobei
X²¹ ausgewählt ist aus der Gruppe, bestehend aus Ca²⁺, Ba²⁺, Mg²⁺, and Zn²⁺,
G¹ und G² unabhängig voneinander stehen für 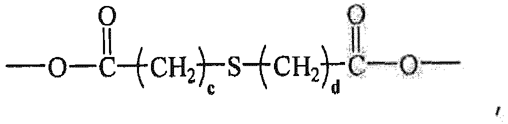
wobei c und d unabhängig voneinander eine Ganzzahl in einem Bereich von 1 bis 6 sind, und
p ist eine Ganzzahl in einem Bereich von 1 bis 9, mit der Maßgabe, dass eine Vielzahl von G¹ gleich oder verschieden sind und eine Vielzahl von X²¹ gleich oder verschieden sind, wenn p eine Ganzzahl gleich zu oder größer als 2 ist,
und 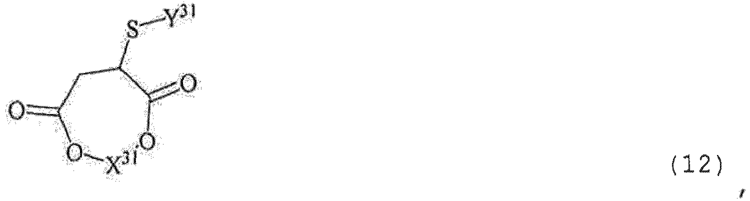
wobei
X³¹ ausgewählt ist aus der Gruppe, bestehend aus Ca²⁺, Ba²⁺, Mg²⁺ und Zn²⁺, und
Y³¹ ist ausgewählt aus der Gruppe, bestehend aus einer C₁-C₃₀-Alkylgruppe, einer C₆-C₁₈-Arylgruppe und einer Gruppe, wiedergegeben durch R⁹³OOC-(CH₂)ₖ-, wobei R⁹³ ausgewählt ist aus der Gruppe, bestehend aus einer C₁-C₃₀-Alkylgruppe und einer C₆-C₁₈-Arylgruppe, und k ist eine Ganzzahl in einem Bereich von 1 bis 5.

## Revendications

1. Mélange stabilisant pour modifier un polymère à base d'oléfine, le mélange stabilisant étant **caractérisé par** :
au moins un antioxydant contenant du phosphore organique représenté par une formule choisie dans le groupe constitué par les formules (1), (2), (3), (4), (5), (6), (7) et (8), 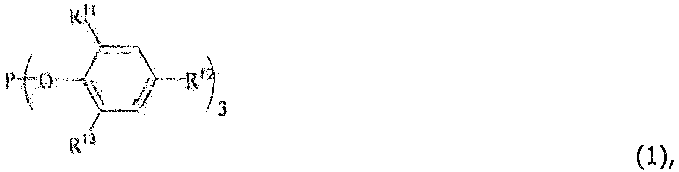 dans laquelle R¹¹, R¹² et R¹³ sont indépendamment choisis dans le groupe constitué par l'hydrogène, un groupe tert-butyle, un groupe isopropylphényle et un groupe alkyle linéaire en C₁-C₈, 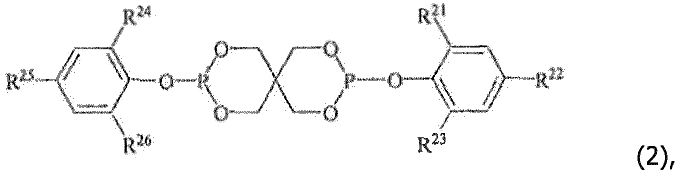 dans laquelle R²¹, R²², R²³, R²⁴, R²⁵ et R²⁶ sont indépendamment choisis dans le groupe constitué par l'hydrogène, un groupe tert-butyle, un groupe isopropylphényle et un groupe alkyle linéaire en C₁-C₈, 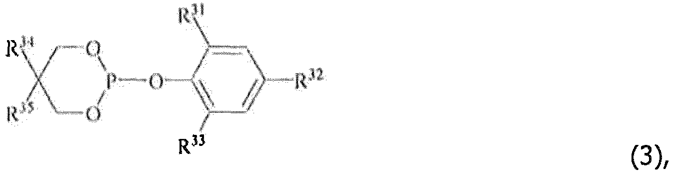 dans laquelle R³¹, R³², R³³, R³⁴ et R³⁵ sont indépendamment choisis dans le groupe constitué par l'hydrogène, un groupe tert-butyle, un groupe isopropylphényle et un groupe alkyle linéaire en C₁-C₈, 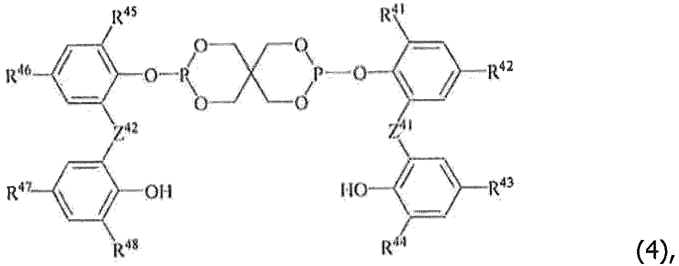 dans laquelle
R⁴¹, R⁴², R⁴³, R⁴⁴, R⁴⁵, R⁴⁶, R⁴⁷ et R⁴⁸ sont indépendamment choisis dans le groupe constitué par l'hydrogène, un groupe tert-butyle, un groupe isopropylphényle et un groupe alkyle linéaire en C₁-C₈, et
Z⁴¹ et Z⁴² sont indépendamment choisis dans le groupe constitué par O, S et un groupe alkylène en C1-C4, 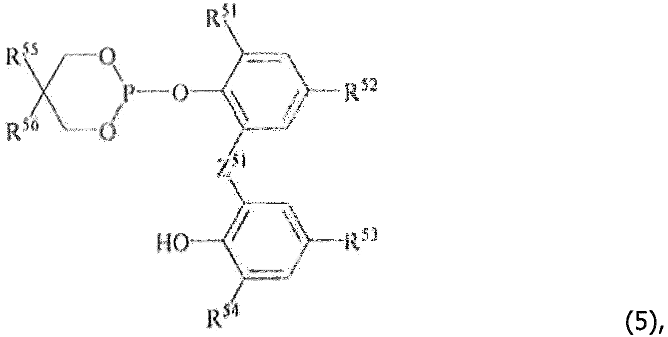
dans laquelle
R⁵¹, R⁵², R⁵³, R⁵⁴, R⁵⁵ et R⁵⁶ sont indépendamment choisis dans le groupe constitué par l'hydrogène, un groupe tert-butyle, un groupe isopropylphényle et un groupe alkyle linéaire en C₁-C₈, et
Z⁵¹ est choisi dans le groupe constitué par O, S et un groupe alkylène en C₁-C₄, 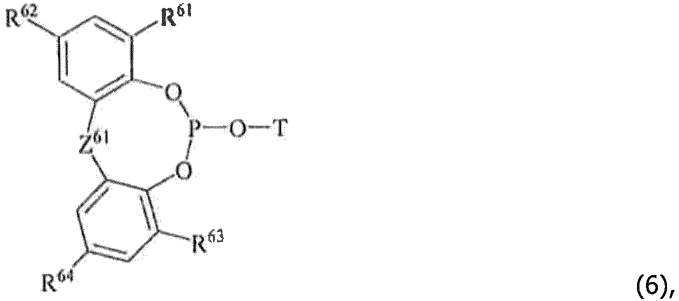
dans laquelle
R⁶¹, R⁶², R⁶³ et R⁶⁴ sont indépendamment choisis dans le groupe constitué par l'hydrogène, un groupe tert-butyle, un groupe isopropylphényle et un groupe alkyle linéaire en C₁-C₈,
T est choisi dans le groupe constitué par un groupe hydrocarboné en C₁-C₁₈ et un groupe représenté par 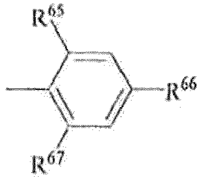 où R65, R66 et R67 sont indépendamment choisis dans le groupe constitué par l'hydrogène, un groupe tert-butyle, un groupe isopropylphényle et un groupe alkyle linéaire en C₁-C₈, et
Z⁶¹ est choisi dans le groupe constitué par O, S et un groupe alkylène en C₁-C₄, 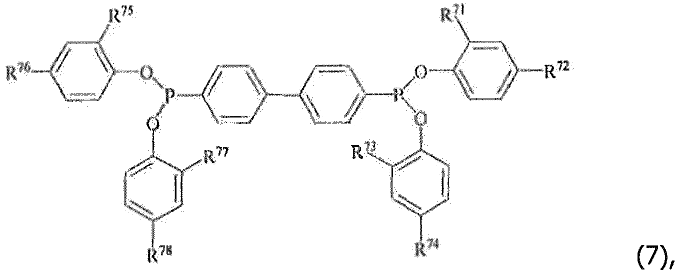
dans laquelle R71, R72, R73, R74, R75, R76, R77 et R78 sont indépendamment choisis dans le groupe constitué par l'hydrogène, un groupe tert-butyle, un groupe isopropylphényle et un groupe alkyle linéaire en C₁-C₈, et 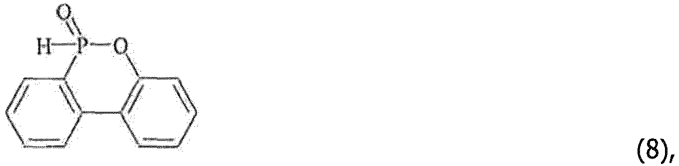 et
au moins un sel carboxylate contenant du soufre, dans lequel
si l'au moins un antioxydant contenant du phosphore organique est représenté par une formule choisie dans le groupe constitué par les formules (2), (3), (4), (5), (6), (7) et (8), l'au moins un sel carboxylate contenant du soufre est représenté par une formule choisie dans le groupe constitué par les formules (9), (10), (11) et (12) ; et
si l'au moins un antioxydant contenant du phosphore organique est représenté par la formule (1), l'au moins un sel carboxylate contenant du soufre est représenté par une formule choisie dans le groupe constitué par les formules (10) et (12), 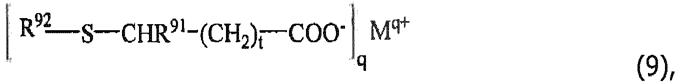
dans laquelle
R⁹¹ est choisi dans le groupe constitué par l'hydrogène et un groupe alkyle en C₁-C₁₈,
R⁹² est choisi dans le groupe constitué par un groupe alkyle en C₁-C₃₀ et un groupe aryle en C₆-C₁₈,
M^{q+} est choisi dans le groupe constitué par Ca²⁺, Ba²⁺, Mg²⁺, Zn²⁺ et Al³⁺,
q est un nombre entier de 2 ou 3, et
t est un nombre entier allant de 0 à 6, 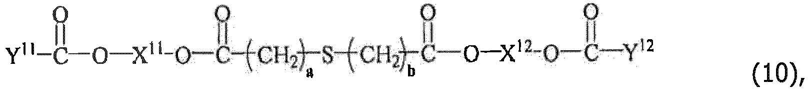
dans laquelle
X¹¹ et X¹² sont indépendamment choisis dans le groupe constitué par Ca²⁺, Ba²⁺, Mg²⁺ et Zn²⁺,
Y¹¹ et Y¹² sont indépendamment choisis dans le groupe constitué par un groupe alkyle en C₁-C₃₀ et un groupe aryle en C₆-C₁₈, et
a et b sont indépendamment un nombre entier allant de 1 à 6, 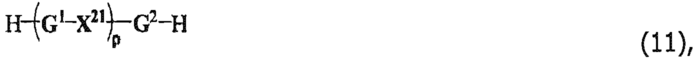
dans laquelle
X²¹ est choisi dans le groupe constitué par Ca²⁺, Ba²⁺, Mg²⁺ et Zn²⁺,
G1 et G2 représentent indépendamment 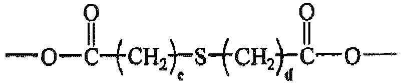 où c et d sont indépendamment un nombre entier allant de 1 à 6, et
p est un nombre entier allant de 1 à 9 sous réserve qu'une pluralité de G¹ soient identiques ou différents et qu'une pluralité de X²¹ soient identiques ou différents lorsque p est un nombre entier égal ou supérieur à 2,
et 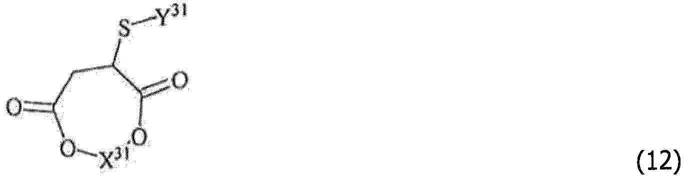
dans laquelle
X³¹ est choisi dans le groupe constitué par Ca²⁺, Ba²⁺, Mg²⁺ et Zn²⁺, et
Y³¹ est choisi dans le groupe constitué par un groupe alkyle en C₁-C₃₀, un groupe aryle en C₆-C₁₈ et un groupe représenté par R⁹³OOC-(CH₂)ₖ- où R⁹³ est choisi dans le groupe constitué par un groupe alkyle en C₁-C₃₀ et un groupe aryle en C₆-C₁₈, et k est un nombre entier allant de 1 à 5.

2. Mélange stabilisant selon la revendication 1, **caractérisé en ce que** :
R⁹¹ représente l'hydrogène, et
R⁹² est choisi dans le groupe constitué par un groupe alkyle en C₁-C₁₈ et un groupe aryle en C₆-C₁₈.

3. Mélange stabilisant selon la revendication 2, **caractérisé en ce que** R⁹² est le dodécyle.

4. Mélange stabilisant selon la revendication 1, **caractérisé en outre par** un antioxydant qui est choisi dans le groupe constitué par un antioxydant phénolique encombré, un antioxydant à base de benzofuranone, un antioxydant à base d'oxyde d'amine et leurs combinaisons.

5. Mélange stabilisant selon la revendication 4, **caractérisé en ce que** l'antioxydant phénolique encombré est choisi dans le groupe constitué par le pentaérythritol-tétra-[β-(3,5-di-tert-butyl-4-hydroxyphényl)-propionate], l'éthylène-bis(oxyéthylène)bis[β-(3-tert-butyl-4-hydroxy-5-méthylphényl)propionate], le 1,3,5-triméthyl-2,4,6-tris(3,5-di-tert-butyl-4-hydroxybenzyl)benzène, le 1,3,5-tris(3,5-di-tert-butyl-4-hydroxybenzyl)isocyanurate, le tris(butylcrésol)butane, le 4,4'-butylidènebis(6-tert-butyl-3-méthylphénol), le N,N'-bis[3-(3,5-di-tert-butyl-4-hydroxyphényl)propionyl]hydrazide, la N,N'-bis-[3-(3,5-di-tert-butyl-4-hydroxyphényl) propionyl]hexaméthylène diamine, le 2,2'-méthylènebis-(4-méthyl-6-tertbutylphénol), l'octyl-3,5-di-tert-butyl-4-hydroxy-hydrocinnamate, le 1,2-di[-(3,5-di-tert-butyl-4-hydroxyphényl)propionyl]hydrazide, le 2,2'-oxamidobis[éthyl-3-(3,5-di-t-butyl-4-hydroxyphényl)propionate], et leurs combinaisons.

6. Mélange stabilisant selon la revendication 4, **caractérisé en ce que** l'antioxydant à base de benzofuranone est choisi dans le groupe constitué par la xylyldibutylbenzofuranone, la 5-(tert-butyl)-3-[5-(tert-butyl)-2-hydroxyphényl]benzofuran-2(3H)-one, la 3-[3,5-bis(1,1-diméthyléthyl)-2-hydroxyphényl]-5,7-bis(1,1-diméthyléthyl)-2(3H)-benzofuranone, et leurs combinaisons.

7. Mélange stabilisant selon la revendication 4, **caractérisé en ce que** l'antioxydant à base d'oxyde d'amine est choisi dans le groupe constitué par une bis(alkyl de suif hydrogéné)amine oxydée, la bis(octadécyl)hydroxylamine et une combinaison de celles-ci.

8. Mélange stabilisant selon la revendication 1, **caractérisé en outre par** un additif qui est choisi dans le groupe constitué par un agent antiacide, un agent désactivant les métaux et une combinaison de ceux-ci.

9. Mélange stabilisant selon la revendication 8, **caractérisé en ce que** l'agent antiacide est un sel d'acide gras.

10. Mélange stabilisant selon la revendication 8, **caractérisé en ce que** l'agent désactivant les métaux est l'oxalyl-bis(benzylidène)hydrazide.

11. Composition polymère modifiée, **caractérisée par** :
un polymère à base d'oléfine choisi dans le groupe constitué par une polyoléfine, un copolymère d'éthylène-acétate de vinyle et une combinaison de ceux-ci ; et
le mélange stabilisant selon l'une quelconque des revendications 1 à 10.

12. Composition polymère modifiée selon la revendication 11, **caractérisée en ce que** ledit mélange stabilisant est présent en une quantité allant de 0,01 à 2,2 parties en poids pour 100 parties en poids dudit polymère à base d'oléfine.

13. Composition polymère modifiée selon la revendication 11, **caractérisée en ce que** ladite polyoléfine est choisie dans le groupe constitué par le polyéthylène, le polypropylène et une combinaison de ceux-ci.

14. Utilisation d'un mélange stabilisant pour modifier un polymère à base d'oléfine choisi dans le groupe constitué par une polyoléfine, un copolymère d'éthylène-acétate de vinyle, et une combinaison de ceux-ci, l'utilisation étant **caractérisée en ce que** le mélange stabilisant comprend :
au moins un antioxydant contenant du phosphore organique représenté par une formule choisie dans le groupe constitué par les formules (1), (2), (3), (4), (5), (6), (7) et (8), 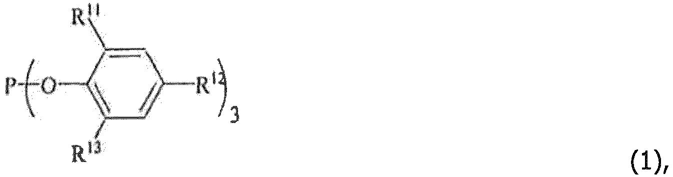 dans laquelle R¹¹, R¹² et R¹³ sont indépendamment choisis dans le groupe constitué par l'hydrogène, un groupe tert-butyle, un groupe isopropylphényle et un groupe alkyle linéaire en C₁-C₈, 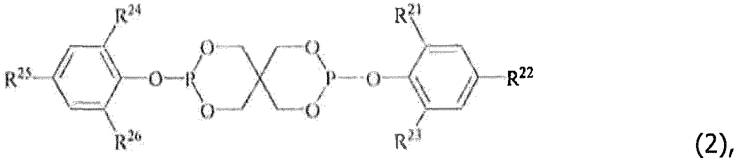 dans laquelle R²¹, R²², R²³, R²⁴, R²⁵ et R²⁶ sont indépendamment choisis dans le groupe constitué par l'hydrogène, un groupe tert-butyle, un groupe isopropylphényle et un groupe alkyle linéaire en C₁-C₈, 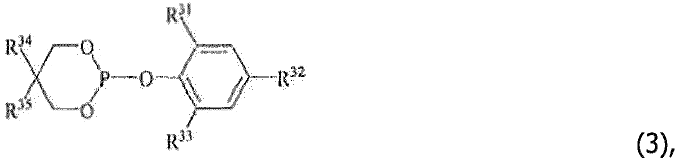 dans laquelle R³¹, R³², R³³, R³⁴ et R³⁵ sont indépendamment choisis dans le groupe constitué par l'hydrogène, un groupe tert-butyle, un groupe isopropylphényle et un groupe alkyle linéaire en C₁-C₈, 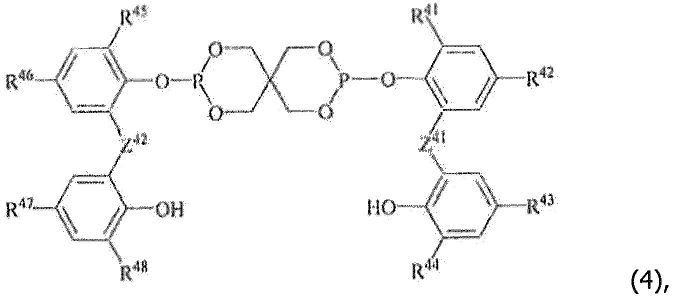 dans laquelle
R⁴¹, R⁴², R⁴³, R⁴⁴, R⁴⁵, R⁴⁶, R⁴⁷ et R⁴⁸ sont indépendamment choisis dans le groupe constitué par l'hydrogène, un groupe tert-butyle, un groupe isopropylphényle et un groupe alkyle linéaire en C₁-C₈, et
Z⁴¹ et Z⁴² sont indépendamment choisis dans le groupe constitué par O, S et un groupe alkylène en C₁-C₄, 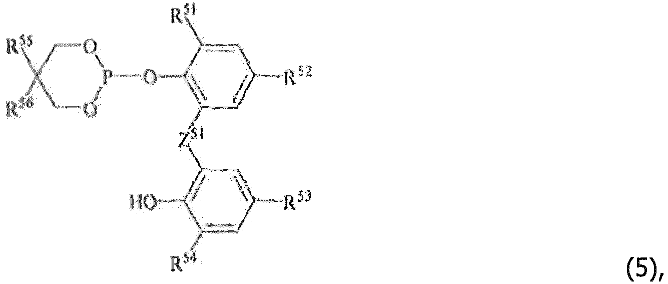
dans laquelle
R⁵¹, R⁵², R⁵³, R⁵⁴, R⁵⁵ et R⁵⁶ sont indépendamment choisis dans le groupe constitué par l'hydrogène, un groupe tert-butyle, un groupe isopropylphényle et un groupe alkyle linéaire en C₁-C₈, et
Z⁵¹ est choisi dans le groupe constitué par O, S et un groupe alkylène en C₁-C₄, 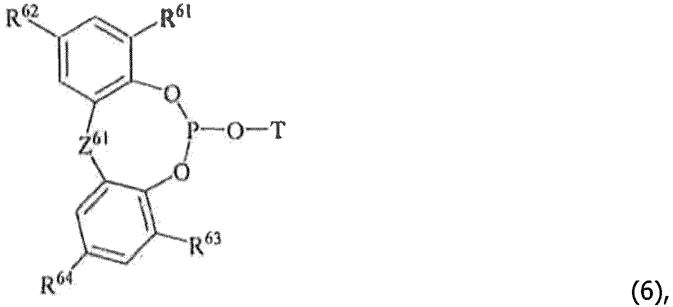
dans laquelle
R⁶¹, R⁶², R⁶³ et R⁶⁴ sont indépendamment choisis dans le groupe constitué par l'hydrogène, un groupe tert-butyle, un groupe isopropylphényle et un groupe alkyle linéaire en C₁-C₈,
T est choisi dans le groupe constitué par un groupe hydrocarboné en C₁-C₁₈ et un groupe représenté par 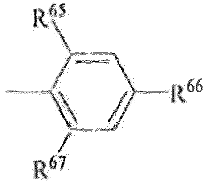 où R⁶⁵, R⁶⁶ et R⁶⁷ sont indépendamment choisis dans le groupe constitué par l'hydrogène, un groupe tert-butyle, un groupe isopropylphényle et un groupe alkyle linéaire en C₁-C₈, et
Z⁶¹ est choisi dans le groupe constitué par O, S et un groupe alkylène en C₁-C₄, 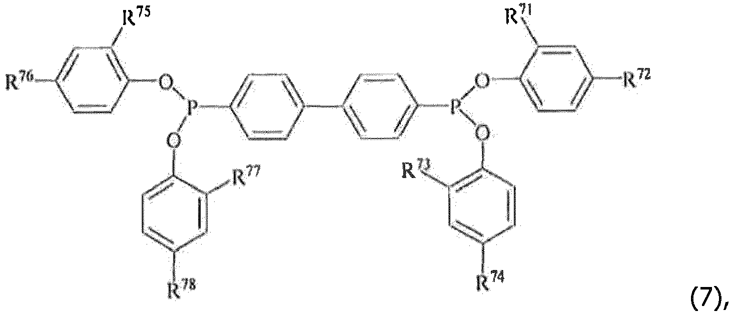
dans laquelle R⁷¹, R⁷², R⁷³, R⁷⁴, R⁷⁵, R⁷⁶, R⁷⁷ et R⁷⁸ sont indépendamment choisis dans le groupe constitué par l'hydrogène, un groupe tert-butyle, un groupe isopropylphényle et un groupe alkyle linéaire en C₁-C₈, et 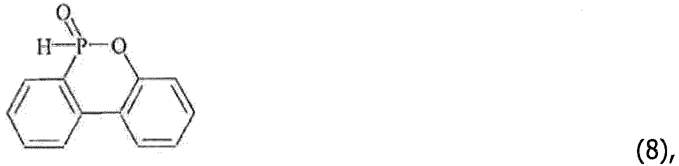 et
au moins un sel carboxylate contenant du soufre, dans lequel
si l'au moins un antioxydant contenant du phosphore organique est représenté par une formule choisie dans le groupe constitué par les formules (2), (3), (4), (5), (6), (7) et (8), l'au moins un sel carboxylate contenant du soufre est représenté par une formule choisie dans le groupe constitué par les formules (9), (10), (11) et (12) ; et
si l'au moins un antioxydant contenant du phosphore organique est représenté par la formule (1), l'au moins un sel carboxylate contenant du soufre est représenté par une formule choisie dans le groupe constitué par les formules (9), (10) et (12), 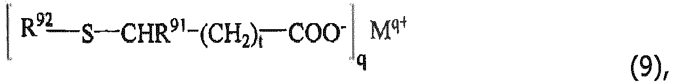
dans laquelle
R⁹¹ est choisi dans le groupe constitué par l'hydrogène et un groupe alkyle en C₁-C₁₈,
R⁹² est choisi dans le groupe constitué par un groupe alkyle en C₁-C₃₀ et un groupe aryle en C₆-C₁₈,
M^{q+} est choisi dans le groupe constitué par Ca²⁺, Ba²⁺, Mg²⁺, Zn²⁺ et Al³⁺,
q est un nombre entier de 2 ou 3, et
t est un nombre entier allant de 0 à 6, 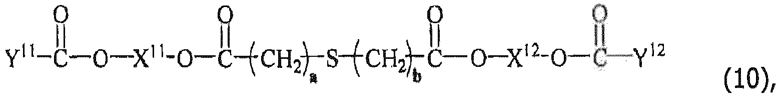
dans laquelle
X¹¹ et X¹² sont indépendamment choisis dans le groupe constitué par Ca²⁺, Ba²⁺, Mg²⁺ et Zn²⁺,
Y¹¹ et Y¹² sont indépendamment choisis dans le groupe constitué par un groupe alkyle en C₁-C₃₀ et un groupe aryle en C₆-C₁₈, et
a et b sont indépendamment un nombre entier allant de 1 à 6, 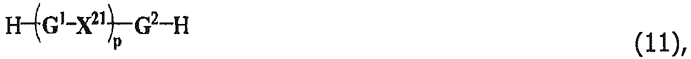
dans laquelle
X²¹ est choisi dans le groupe constitué par Ca²⁺, Ba²⁺, Mg²⁺ et Zn²⁺,
G¹ et G² représentent indépendamment 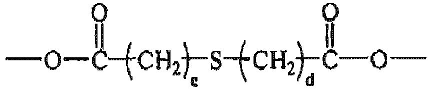 où c et d sont indépendamment un nombre entier allant de 1 à 6, et
p est un nombre entier allant de 1 à 9 sous réserve qu'une pluralité de G¹ soient identiques ou différents et qu'une pluralité de X²¹ soient identiques ou différents lorsque p est un nombre entier égal ou supérieur à 2,
et 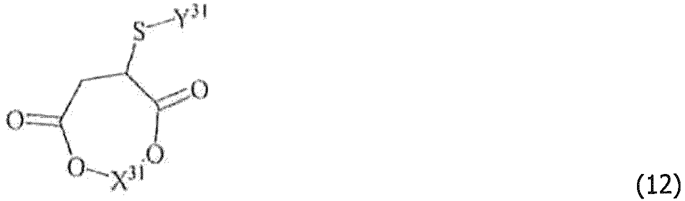
dans laquelle
X³¹ est choisi dans le groupe constitué par Ca²⁺, Ba²⁺, Mg²⁺ et Zn²⁺, et
Y³¹ est choisi dans le groupe constitué par un groupe alkyle en C₁-C₃₀, un groupe aryle en C₆-C₁₈ et un groupe représenté par R⁹³OOC-(CH₂)ₖ- où R⁹³ est choisi dans le groupe constitué par un groupe alkyle en C₁-C₃₀ et un groupe aryle en C₆-C₁₈, et k est un nombre entier allant de 1 à 5.
